# EUROPEAN PATENT APPLICATION

(11) **EP 4 322 448 A1**
(43) Date of publication of application: **14.02.2024**
(21) Application number: 22794989.8
(22) Date of filing: 28.04.2022
(51) Int. Cl.: H04L 5/00

(54) **COMMUNICATION METHOD AND APPARATUS**

(30) Priority: 30.04.2021 CN 202110479909
(71) Applicant: Huawei Technologies Co., Ltd., Longgang Shenzhen, Guangdong 518129 (CN)
(72) Inventor: WANG, Jun, Shenzhen, Guangdong 518129 (CN); LYU, Yongxia, Shenzhen, Guangdong 518129 (CN); WANG, Ting, Shenzhen, Guangdong 518129 (CN); ZHANG, Liqing, Shenzhen, Guangdong 518129 (CN); MA, Jianglei, Shenzhen, Guangdong 518129 (CN)
(74) Representative: Gill Jennings & Every LLP
(86) International application number: PCT/CN2022/089919
(87) International publication number: WO 2022/228519

(57) **Abstract**

Embodiments of this application provide a communication method and apparatus, to support aggregation between carriers in different RATs, so as to improve communication performance. The communication method includes: A first access node determines scheduling information, where the scheduling information indicates resource information to be used by a second access node to receive data or send data; and the first access node sends the scheduling information to the second access node.

## Description

### CROSS-REFERENCE TO RELATED APPLICATIONS

This application claims priority to Chinese Patent Application No. 202110479909.X, filed with the China National Intellectual Property Administration on April 30, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

With evolution of wireless technologies, communication systems in different RATs emerge, for example, a long term evolution (long term evolution, LTE) system and a new radio (new radio, NR) system. An operator needs to deploy two or more RATs to meet market requirements. For a deployment requirement of the operator, in an NR standard, a multi-radio dual connectivity (multi radio-dual connectivity, MR-DC) communication manner is supported for data splitting between an LTE system and an NR system. A subsequent NR release is also evolved based on MR-DC.

However, MR-DC does not support aggregation between a plurality of carriers, and cannot support carrier aggregation features such as dynamic/real-time scheduling negotiation between different carriers, cross-carrier scheduling, and joint uplink control information feedback. Therefore, communication performance is poor.

### SUMMARY

This application provides a communication method and apparatus, to support aggregation between carriers in different RATs, so as to implement a carrier aggregation feature, and improve communication performance.

According to a first aspect, a communication method is provided. In the method, a first access node determines scheduling information, where the scheduling information indicates resource information to be used by a second access node to receive data or send data; the first access node sends the scheduling information to the second access node, and the second access node receives the scheduling information; and the second access node determines the resource information for receiving data or sending data.

A RAT of the first access node may be the same as or different from a RAT of the second access node.

In the method, scheduling or interconnection and interworking for user data or the like can be implemented between different access nodes, so that communication performance is improved. In addition, interconnection and interworking between access nodes in different RATs may be further implemented, and interconnection and interworking between access nodes of different vendors may also be implemented. This implements a carrier aggregation feature and further improves communication performance.

In a possible design, the scheduling information is dynamic scheduling information or semi-persistent scheduling information. Resource information can be scheduled between access nodes in a dynamic scheduling or semi-persistent scheduling manner, so that flexibility of resource scheduling is improved. In addition, scheduling negotiation between different carriers can be implemented, so that communication performance is improved.

In a possible design, the scheduling information includes one or more downlink control information DCI elements, and the one or more DCI elements are used to generate DCI, or the scheduling information includes DCI. Dynamic/real-time scheduling negotiation between different carriers and cross-carrier scheduling are supported to improve communication performance.

In a possible design, the second access node may generate DCI, and send the DCI to the first access node, and the first access node may further receive the DCI, and send the DCI to a terminal device. When the first access node has no capability of generating DCI, the first access node may receive DCI generated by another access node (for example, the second access node), and then deliver the DCI, to implement resource information scheduling and improve communication performance.

In a possible design, the scheduling information includes uplink scheduling information. Uplink resource information may be scheduled between access nodes, to further improve communication performance.

In a possible design, the uplink scheduling information includes one or more of the following: scheduling information of a random access channel, scheduling information of a scheduling request, scheduling information of a buffer status report, or scheduling information of a channel state. An access node may allocate uplink resource information to a terminal device based on uplink scheduling information.

In a possible design, the second access node may further receive uplink information. The uplink information includes one or more of the following: random access channel information, the scheduling request, the buffer status report, or channel state information. The second access node sends the uplink information to the first access node, and the first access node receives the uplink information. A terminal device may send uplink information to request an access node to allocate uplink resource information to the terminal device, and access nodes may implement negotiation and scheduling between different carriers.

In a possible design, when the first access node determines the scheduling information, the first access node may send first request information to the second access node, and the second access node receives the first request information, where the first request information is for requesting the scheduling information, and the first request information includes a scheduling result; and the second access node sends the scheduling information to the first access node, and the first access node receives the scheduling information. When the first access node has a scheduling capability but does not have a capability of generating scheduling information, the first access node may request the second access node to generate scheduling information, to implement scheduling negotiation between different carriers.

Optionally, the second access node may send first request information to the first access node, and then the first access node may send scheduling information to the second access node. When the second access node has no scheduling capability or has no capability of generating scheduling information, the second access node may request the first access node to send scheduling information, to implement scheduling negotiation between different carriers.

In a possible design, the first access node may further send data information to the second access node, the second access node receives the data information from the first access node, and the second access node sends the data information to the terminal device. The data information is downlink data information. As a data source node, the first access node may obtain the data information of a user from a core network, and deliver the data information to the terminal device through the second access node. Alternatively, the first access node may directly deliver the data information to the terminal device.

Optionally, the data information is user data, or a radio link control RLC protocol data unit PDU obtained by the first access node processing user data, or a medium access control MAC sub-protocol data unit SubPDU obtained by the first access node processing user data, or a MAC PDU obtained by the first access node processing user data, or redundancy version RV version data obtained by the first access node processing user data.

In a possible design, the second access node may further send second request information to the first access node, and the first access node receives the second request information, where the second request information is for requesting data information. The first access node may send the data information to the second access node based on a request of the second access node, to implement communication between different access nodes.

In a possible design, the first access node may further send logical channel information to the second access node, and the second access node receives the logical channel information. The logical channel information is related to a logical channel of a user to which the user data belongs. The second access node may determine, based on the logical channel information, an amount of data to be sent to the terminal device, to further improve communication performance.

In a possible design, the second access node may further send data information to the first access node, and the first access node receives the data information from the second access node, and sends the data information to the terminal device. The data information is downlink data information. As a data source node, the second access node may obtain the data information of a user from a core network, and deliver the data information to the terminal device through the first access node. Alternatively, the second access node may directly deliver the data information to the terminal device.

In a possible design, when the data information is user data, or an RLC PDU obtained by the second access node processing user data, or a MAC SubPDU obtained by the second access node processing user data, or a MAC PDU obtained by the second access node processing user data, the first access node sends retransmission scheduling information to the second access node, and the second access node receives the retransmission scheduling information. For a type of data exchanged between the first access node and the second access node, in a retransmission scenario, a MAC entity of the first access node may send retransmission scheduling information, to implement data information retransmission. Optionally, the second access node is a data source node.

In a possible design, when the data information is RV version data obtained by the second access node processing user data, the second access node sends new RV version data to the first access node. The first access node receives the new RV version data from the second access node, and sends the new RV version data to the terminal device. For a type of data exchanged between the first access node and the second access node, in a retransmission scenario, the second access node may generate new RV version data for retransmission. Optionally, the second access node is a data source node.

In a possible design, the second access node sends feedback information for the data information to the first access node, and the first access node receives the feedback information from the second access node, where the feedback information is used to feed back a data information sending success or failure. The first access node may determine, based on the feedback information, whether to retransmit the data information, so that communication performance can be further improved.

In a possible design, a MAC entity of the first access node is connected to a MAC entity of the second access node; or a MAC entity of the first access node is separately connected to a PHY entity of the first access node and a PHY entity of the second access node.

In a possible design, when a MAC1 entity of the first access node is connected to a MAC1 entity of the second access node, an RLC1 entity of the first node is connected to the MAC 1 entity; or an RLC 1 entity of the first node is separately connected to the MAC 1 entity and the MAC2 entity; or an RLC 1 entity of the first node is connected to the MAC1 entity, and an RLC2 entity of the second node is connected to the MAC2 entity.

According to a second aspect, a communication apparatus is provided, configured to implement the foregoing methods. The communication apparatus may be the access node in the first aspect, or an apparatus including the access node, or an apparatus included in the access node, such as a chip; or the communication apparatus may be the terminal device in the first aspect, or an apparatus including the terminal device, or an apparatus included in the terminal device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a third aspect, a communication apparatus is provided, including a processor and an interface circuit. The interface circuit is configured to communicate with a module outside the communication apparatus; and the processor is configured to run a computer program or instructions to perform the method according to any one of the foregoing aspects. The communication apparatus may be the access node in the first aspect, or an apparatus including the access node, or an apparatus included in the access node, such as a chip; or the communication apparatus may be the terminal device in the first aspect, or an apparatus including the terminal device, or an apparatus included in the terminal device.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method in any one of the foregoing aspects.

In some possible designs, the communication apparatus may be a chip or a chip system.

According to a fourth aspect, a communication apparatus is provided, including a processor. The processor is configured to: be coupled to a memory, and after reading instructions in the memory, perform the method in any one of the foregoing aspects according to the instructions. The communication apparatus may be the access node in the first aspect, or an apparatus including the access node, or an apparatus included in the access node, such as a chip; or the communication apparatus may be the terminal device in the first aspect, or an apparatus including the terminal device, or an apparatus included in the terminal device.

According to a fifth aspect, a computer-readable storage medium is provided. The computer-readable storage medium stores instructions, and when the instructions are run on a communications apparatus, the communications apparatus is enabled to perform the method in any one of the foregoing aspects. The communication apparatus may be the access node in the first aspect, or an apparatus including the access node, or an apparatus included in the access node, such as a chip; or the communication apparatus may be the terminal device in the first aspect, or an apparatus including the terminal device, or an apparatus included in the terminal device.

According to a sixth aspect, a computer program product including instructions is provided. When the computer program product runs on a communications apparatus, the communications apparatus is enabled to perform the method in any one of the foregoing aspects. The communication apparatus may be the access node in the first aspect, or an apparatus including the access node, or an apparatus included in the access node, such as a chip; or the communication apparatus may be the terminal device in the first aspect, or an apparatus including the terminal device, or an apparatus included in the terminal device.

According to a seventh aspect, a communication apparatus (for example, the communication apparatus may be a chip or a chip system) is provided. The communication apparatus includes a processor, configured to implement a function in any one of the foregoing aspects. In a possible design, the communication apparatus further includes a memory, and the memory is configured to store necessary program instructions and data. When being a chip system, the communication apparatus may include a chip, or may include a chip and another discrete component.

According to an eighth aspect, a communication system is provided. The communication system includes the first access node in the foregoing aspect and the second access node in the foregoing aspect.

Optionally, the communication system further includes a terminal device.

For technical effects brought by any one of the designs of the second aspect to the eighth aspect, refer to the technical effects brought by the different designs of the first aspect. Details are not described herein again.

### BRIEF DESCRIPTION OF DRAWINGS

FIG. 1 is a schematic diagram of a scheduling scenario;
FIG. 2 is a schematic diagram of sounding reference signal switching;
FIG. 3 is a schematic diagram of a communication system according to an embodiment of this application;
FIG. 4 is a schematic diagram of another communication system according to an embodiment of this application;
FIG. 5 is a schematic diagram of a possible protocol layer according to an embodiment of this application;
FIG. 6A and FIG. 6B are a schematic diagram of a multi-radio dual connectivity deployment scenario;
FIG. 7 is a schematic diagram of an interface in a protocol stack;
FIG. 8 is a schematic diagram of a multi-radio dual connectivity protocol stack;
FIG. 9 is a schematic diagram of a communication process according to an embodiment of this application;
FIG. 10 is a schematic diagram of a format of a buffer status report according to an embodiment of this application;
FIG. 11 is a schematic diagram of a protocol stack according to an embodiment of this application;
FIG. 12 is a schematic diagram of a protocol stack according to an embodiment of this application;
FIG. 13 is a schematic diagram of a protocol stack according to an embodiment of this application;
FIG. 14 is a schematic diagram of a protocol stack according to an embodiment of this application;
FIG. 15 is a schematic diagram of a communication method according to an embodiment of this application;
FIG. 16 is a schematic diagram of another communication method according to an embodiment of this application;
FIG. 17 is a schematic diagram of another communication method according to an embodiment of this application;
FIG. 18 is a schematic diagram of a format of a MAC PDU according to an embodiment of this application;
FIG. 19 is a schematic diagram of another communication method according to an embodiment of this application;
FIG. 20 is a schematic diagram of another communication method according to an embodiment of this application;
FIG. 21 is a schematic diagram of another communication method according to an embodiment of this application;
FIG. 22 is a schematic diagram of another communication method according to an embodiment of this application;
FIG. 23 is a schematic diagram of another communication method according to an embodiment of this application;
FIG. 24 is a schematic diagram of a format of another MAC PDU according to an embodiment of this application;
FIG. 25 is a schematic flowchart of a protocol stack configuration method according to an embodiment of this application;
FIG. 26 is a schematic diagram of a structure of a communication apparatus according to an embodiment of this application; and
FIG. 27 is a schematic diagram of a structure of another communication apparatus according to an embodiment of this application.

### DESCRIPTION OF EMBODIMENTS

The following further describes this application in detail with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the term "for example" is used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The following describes some terms in embodiments of this application, to facilitate understanding of a person skilled in the art.
(1) Terminal device: also referred to as user equipment (user equipment, UE), is a device having wireless sending and receiving functions, and may communicate with one or more core network (core network, CN) devices (which may alternatively be referred to as core devices) through an access network device (which may alternatively be referred to as an access device) in a radio access network (radio access network, RAN).

The user equipment may also be referred to as an access terminal, a terminal, a subscriber unit, a subscriber station, a mobile station, a mobile console, a remote station, a remote terminal, a mobile device, a user terminal, a user agent, a user apparatus, or the like. The user equipment may be deployed on land, and include indoor user equipment, outdoor user equipment, handheld user equipment, or vehicle-mounted user equipment; or may be deployed on a water surface (for example, on a ship); or may be deployed in the air (for example, on an aircraft, a balloon, or a satellite). The user equipment may be a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the user equipment may be a handheld device with a wireless communication function, a computing device or another device connected to a wireless modem, a vehicle-mounted device, a wearable device, an uncrewed aerial vehicle device, a terminal in the internet of things or the internet of vehicles, a terminal in any form in a 5th generation (5th-generation, 5G) network and a future network, relay user equipment, a terminal in a future evolved PLMN, or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A type or the like of the terminal device is not limited in embodiments of this application.

(2) Network device: is a device that can provide a wireless access function for a terminal. The network device may support at least one wireless communication technology, for example, LTE or NR. The network device is also referred to as a network node or a node.

For example, the network device may include an access network device (which is also referred to as an access node or a node). For example, the network device includes but is not limited to a next generation NodeB (generation NodeB, gNB) in a 5G network, an evolved NodeB (evolved NodeB, eNB), a radio network controller (radio network controller, RNC), a NodeB (NodeB, NB), a home base station (for example, a home evolved NodeB or a home NodeB, HNB), a baseband unit (baseband unit, BBU), a transmitting and receiving point (transmitting and receiving point, TRP), a transmitting point (transmitting point, TP), a mobile switching center, a small cell, a micro base station, or the like. Alternatively, the network device may be a radio controller, a central unit (central unit, CU), and/or a distributed unit (distributed unit, DU) in a cloud radio access network (cloud radio access network, CRAN) scenario, or the network device may be a relay station, an access point, a vehicle-mounted device, a terminal, a wearable device, a network device in future mobile communication, a network device in a future evolved public land mobile network (public land mobile network, PLMN), or the like. The access network device is also referred to as an access node.

For another example, the network device may include a core network (CN) device, and the core network device includes, for example, an access and mobility management function (access and mobility management function, AMF).

An area covered by one access network device or a part of the access network device is referred to as a cell.

(3) Carrier aggregation (carrier aggregation, CA): Currently, only carriers in a same RAT can be aggregated. For example, when a terminal device accesses a 5G network, all carriers configured by a network device for the terminal device are 5G carriers. When a terminal device accesses an LTE network, all carriers configured by a network device for the terminal device are LTE carriers.

Carriers corresponding to different cells participating in carrier aggregation may be referred to as component carriers (component carrier, CC). CAmay include a primary component carrier (primary component carrier, PCC) and a secondary component carrier (secondary component carrier, SCC). Alternatively, CA may include a primary cell (primary cell, PCell) and a secondary cell (secondary cell, SCell). There may be one or more PCCs or one or more SCCs. There may be one or more PCells or one or more SCells.

CA includes but is not limited to at least one of the following features.

A possible feature is that in CA, quantities of multiple-input multiple-output (multiple input multiple output, MIMO) layers of a plurality of carriers can be dynamically shared, and resource configurations can be jointly optimized.

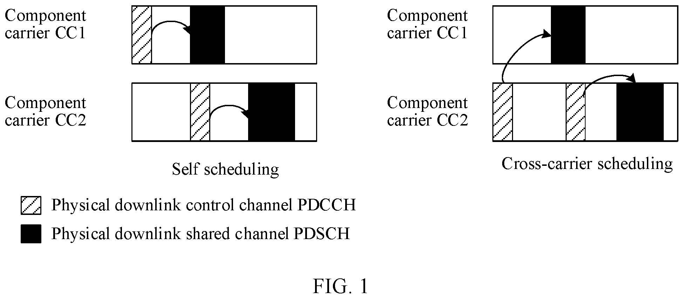

A possible feature is that CA currently supports cross-carrier scheduling in a same RAT. Cross-carrier scheduling is relative to self-scheduling. In a self-scheduling scenario, uplink data scheduling information and/or downlink data scheduling information of CC1 may be sent on CC1. In a cross-carrier scheduling scenario, uplink data scheduling information and/or downlink data scheduling information of CC1 may be sent on CC2. For example, as shown in FIG. 1, in a self-scheduling scenario, downlink control information (downlink control information, DCI) of CC1 is sent on CC1, and DCI of CC2 is sent on CC2. In a cross-carrier scheduling scenario, DCI of CC1 may be sent on CC2, and DCI of CC2 may be sent on CC2. In this case, cross-carrier scheduling is performed for the DCI of CC1, and self-scheduling is performed for the DCI of CC2. The DCI indicates related scheduling information of a physical downlink shared channel (physical downlink shared channel, PDSCH). Optionally, the DCI of CC1 and the DCI of CC2 may be sent in one piece of DCI. The DCI may be carried on a physical downlink control channel (physical downlink control channel, PDCCH).

An access node may configure cross-carrier scheduling configuration information for a terminal device by using radio resource control (radio resource control, RRC) signaling. The cross-carrier scheduling configuration information indicates self-scheduling (own) or cross-carrier scheduling (other). If indicating cross-carrier scheduling, the cross-carrier scheduling configuration information further indicates a scheduling cell identifier (schedulingCellId) and information about a scheduled carrier indicator field (carrier indicator field, CIF), where the CIF may be indicated by a field cif-InSchedulingCell, and cif-InSchedulingCell may occupy 3 bits (bits). The cross-carrier scheduling configuration information may be downlink control information (downlink control information, DCI).

Cross-carrier scheduling can balance load, flexibly coordinate a resource, and improve spectral efficiency.

A possible feature is that CA supports sounding reference signal (sounding reference signal, SRS) switching (switching). An SRS may be used for uplink channel estimation and downlink beamforming.

In a time division duplex (time division duplex, TDD) asymmetric CA scenario, for example, when a quantity of downlink carriers is greater than that of uplink carriers, an SRS needs to be scheduled on an SCC to optimize downlink scheduling. The SCC is a carrier without a physical uplink shared channel (physical uplink shared channel, PUSCH). Due to a limited capability, a terminal device can send an uplink signal in only one cell. The terminal device may send an uplink signal on a plurality of CCs by using a function of SRS-CarrierSwitching. For a terminal device with a limited uplink capability, fast SRS switching between a plurality of uplink carriers is supported, to improve downlink transmission performance.

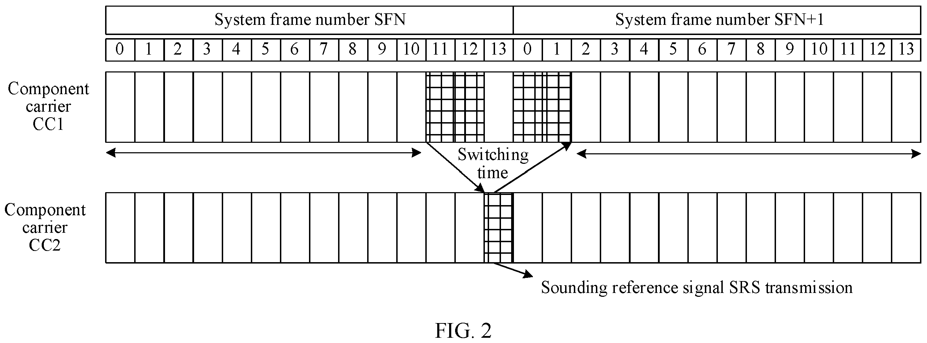

For example, as shown in FIG. 2, on symbols numbered 0 to 10 in a system frame number (system frame number, SFN), a terminal device sends a PUSCH on CC1. When switching time (Switching time) arrives, on a symbol numbered 13 in the SFN, the terminal device switches to CC2 to perform SRS transmission. After the switching time ends, on a symbol numbered 2 in (SFN+1), the terminal device switches back to CC1 to continue to send the PUSCH. In FIG. 2, the switching time lasts from a symbol numbered 10 in the SFN to a symbol numbered 1 in the (SFN+1).

A possible feature is that CA supports joint (joint) uplink control information (uplink control information, UCI) feedback (feedback). The terminal device may jointly code acknowledgment/negative acknowledgment (ACK/NACK) information of PDSCHs of a plurality of CCs and/or channel state information (channel state information, CSI) of a plurality of CCs on one CC for feedback. Joint UCI feedback can reduce overheads of uplink feedback resources, improve spectral efficiency, and improve uplink transmission performance.

A possible feature is uplink power control for CA. Symbol-level dynamic power sharing can be implemented between different CCs in CA. A terminal device may determine transmit power on each symbol based on a priority. Transmission of a higher-priority channel on a higher-priority CC is preferentially satisfied on each symbol. For CC priorities, a priority of a PCC may be higher than a priority of an SCC. A smaller index (index) of a cell may indicate a higher priority. Channel priorities may be: physical random access channel (physical random access channel, PRACH) of a PCell > physical uplink control channel (physical uplink control channel, PUCCH)/PUSCH with a high-priority identifier > (PUCCH with hybrid automatic repeat request (hybrid automatic repeat request, HARQ)-ACK > PUCCH with CSI) in a case of a same priority identifier > SRS (aperiodic SRS > semi-persistent SRS > periodic SRS) or a PRACH that is not in a PCell.

The term "and/or" in this application describes an association relationship of associated objects, and indicates that three relationships may exist. For example, A and/or B may indicate the following three cases: Only A exists, both A and B exist, and only B exists. The character "/" usually indicates an "or" relationship between the associated objects.

"A plurality of" in this application means two or more than two.

In addition, it should be understood that in the descriptions of this application, words such as "first" and "second" are merely used for distinguishing, and cannot be understood as an indication or implication of relative importance or an indication or implication of a sequence.

Technical solutions in embodiments of this application may be applied to a mobile communication system, or may be applied to a satellite communication system. The satellite communication system may be integrated with a conventional mobile communication system. For example, the mobile communication system may be a 4th generation (4th-generation, 4G) communication system (for example, an LTE system), a 5G communication system (for example, an NR system), a future mobile communication system, or another communication system. Embodiments of this application are also applicable to a scenario of a homogeneous network and a scenario of a heterogeneous network. In the scenario of the homogeneous network and the scenario of the heterogeneous network, a transmitting point is not limited. For example, coordinated multipoint transmission may be performed between macro base stations, between micro base stations, and between a macro base station and a micro base station. Embodiments of this application may also be applied to a frequency division duplex (frequency division duplex, FDD) system/TDD system. Embodiments of this application are also applicable to a CU/DU separation architecture. Embodiments of this application are also applicable to a control plane/user plane (Control Plane/User Plane, CP/UP) separation architecture. Embodiments of this application are also applicable to a low band (for example, sub 6G) scenario, a high band (for example, above 6G) scenario, a terahertz communication scenario, an optical communication scenario, and the like. Any communication system that can implement signal transmission may be used. This is not limited in embodiments of this application.

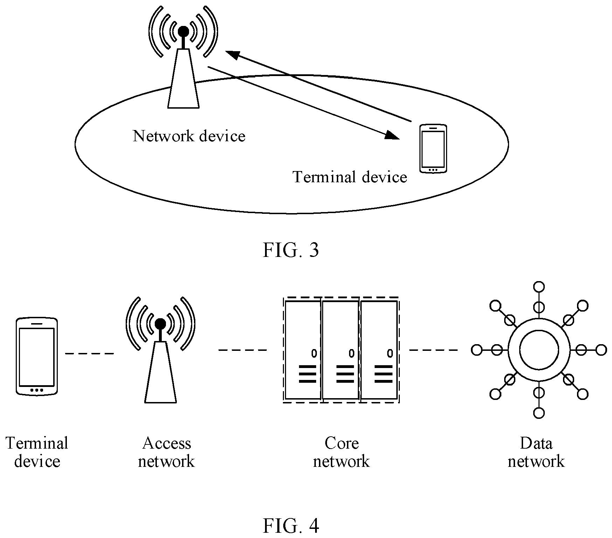

FIG. 3 is a schematic diagram of a possible communication system. The communication system includes a network device and a terminal device. There may be one or more network devices, and there may be one or more terminal devices. The network device may send a signal to the terminal device, and the terminal device may send a signal to the network device.

FIG. 4 is a schematic diagram of another possible communication system. The communication system includes a terminal device, an access network (including an access network device), and a core network (including a core network device). Optionally, the communication system may further include a data network (data network, DN).

The data network may be usually deployed outside a carrier network, for example, may be a third-party network. For example, a carrier network may access a plurality of data networks, and a plurality of services may be deployed on the data network, to provide a data service, a voice service, and/or the like for a terminal device.

The core network is mainly responsible for mobility management, session management, data transmission, and the like of a terminal user.

A network element in the access network includes a base station. The base station is responsible for a function related to an air interface, for example, a radio link maintenance function for maintaining a radio link between the base station and a terminal device; and is responsible for protocol conversion between radio link data and internet protocol (internet protocol, IP) data. For another example, the base station is responsible for a radio resource management function, including radio link establishment and release, radio resource scheduling and allocation, and the like. For another example, the base station is responsible for a mobility management function, including configuring a terminal to perform measurement, evaluating radio link quality of a terminal, determining an inter-cell handover of a terminal, and the like. The base station may include a user plane (user plane) protocol and a control plane (control plane) protocol.

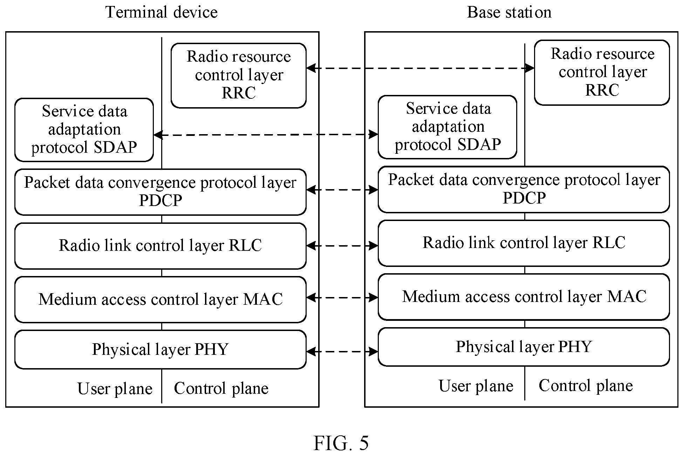

The terminal device may include a user plane protocol and a control plane protocol. The terminal device may interact with the base station through an air interface. As shown in FIG. 5, protocol layers of a terminal device may be connected to protocol layers of a base station to transfer information. The protocol layers include a physical layer (physical layer, PHY), a medium access control (medium access control, MAC) layer, a radio link control (radio link control, RLC) layer, a packet data convergence protocol (packet data convergence protocol, PDCP) layer, a radio resource control (radio resource control, RRC) layer, and a service data adaptation protocol (service data adaptation protocol, SDAP). SDAP belongs to a user plane protocol layer, and RRC belongs to a control plane protocol layer.

To understand embodiments of this application, the following describes related technologies.

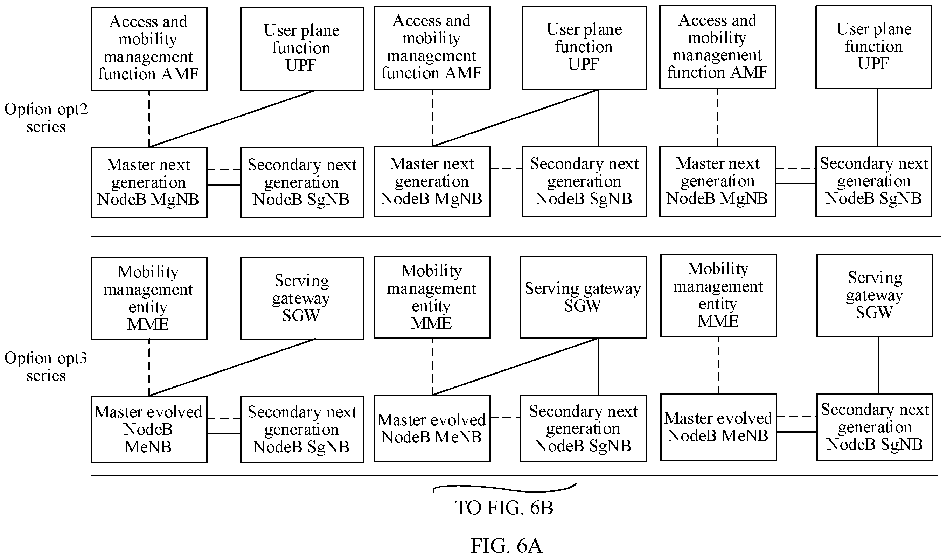

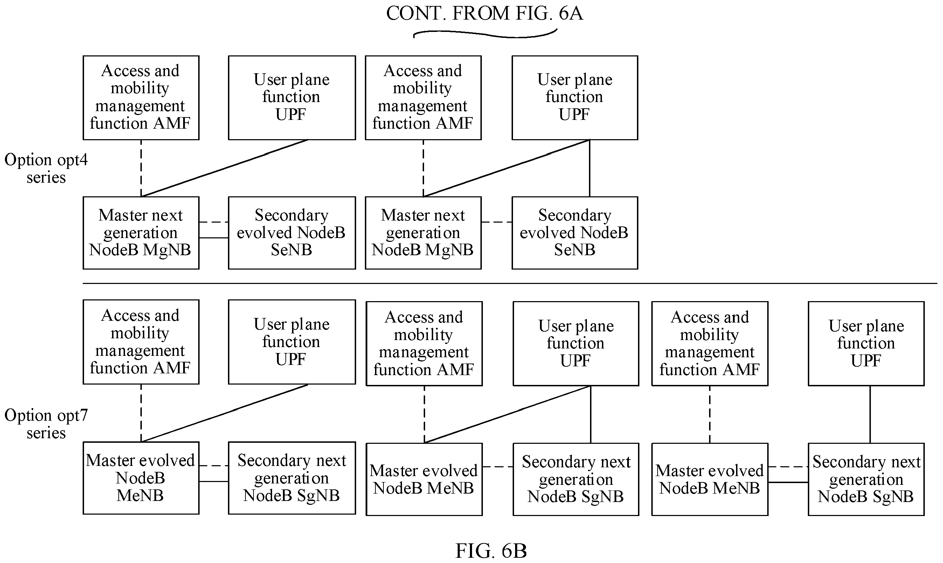

An NR standard supports X-radio access technology (radio access technology, RAT) dual connectivity (dual connectivity, DC), that is, MR-DC. MR-DC includes a master node (master node, MN) and a secondary node (secondary node, SN). As shown in FIG. 6A and FIG. 6B, a plurality of MR-DC options (option, opt) are proposed for different deployment scenarios and DC evolution paths in NR release (release, R) 15. A user plane connection is shown by using a solid line, and a control plane connection is shown by using a dashed line.

In an opt2 series, which is also referred to as NR DC, both a master node and a secondary node are NR base stations (gNB), and the gNB is connected to a 5G CN, for example, an AMF and a user plane function (user plane function, UPF). In an opt3 series, which is also referred to as evolved universal terrestrial radio access network new radio (Evolved Universal Terrestrial Radio Access Network NR, EUTRAN NR, EN)-DC, a master node is an LTE base station (e-eNB), a secondary node is an NR base station (gNB), and the master node and the secondary node are connected to a 4G CN, for example, a mobility management entity (mobility management entity, MME) and a serving gateway (serving gateway, SGW). In an opt4 series, which is also referred to as new radio evolved universal terrestrial radio access network (NR EUTRAN, NE)-DC, a master node is a gNB, a secondary node is an e-eNB, and the master node and the secondary node are connected to a 5G CN, for example, an AMF and a UPF. In an opt7 series, which is also referred to as new radio evolved universal terrestrial radio access network new radio (NR EUTRAN NR, NGEN)-DC, a master node is an e-eNB, a secondary node is a gNB, and the master node and the secondary node are connected to a 5G CN, for example, an AMF and a UPF.

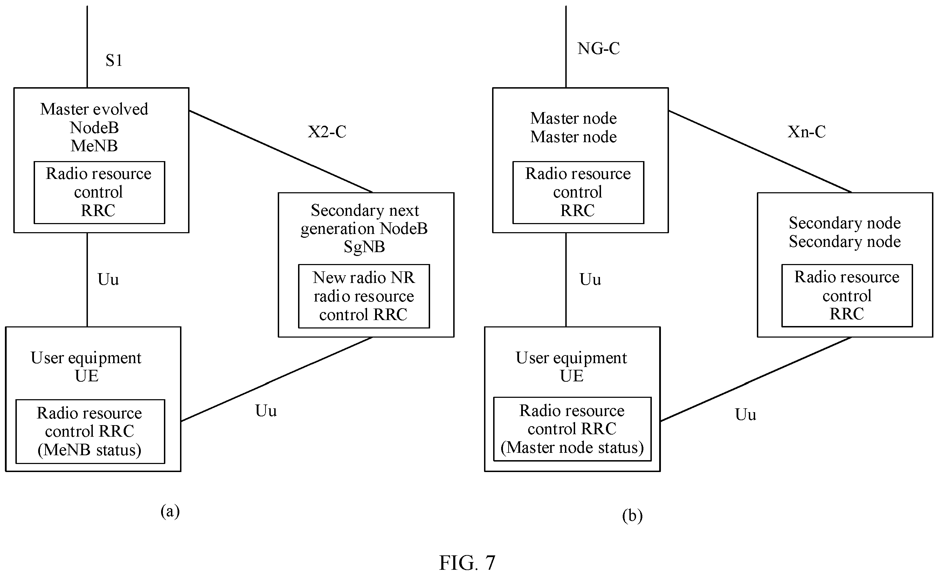

In addition, NR R15 provides a protocol stack 1 and a protocol stack 2. The protocol stack 1 is referred to as MR-DC with EPC, or may be the foregoing EN-DC architecture. The protocol stack 2 is referred to as MR-DC with 5GC, and may include the foregoing NE-DC, NGEN-DC, and NR-DC architectures. FIG. 7 shows an interface (in (a) in FIG. 7) of the protocol stack 1 and an interface (in (b) in FIG. 7) of the protocol stack 2. The protocol stack 1 uses an S1 interface and an X2 interface, and the protocol stack 2 uses an Ng interface and an Xn interface.

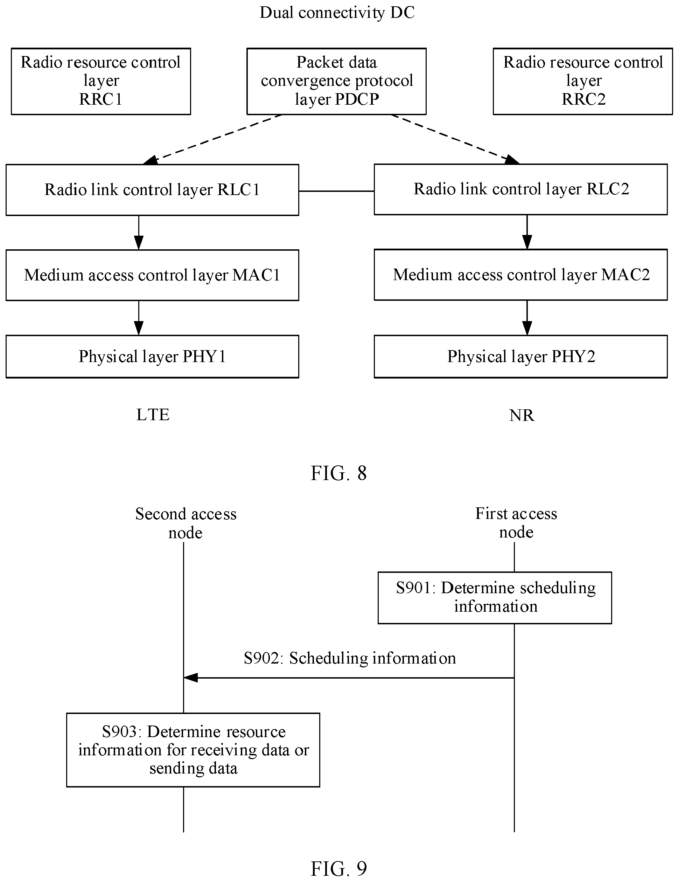

An EN-DC architecture in an MR-DC protocol stack is used as an example. A protocol stack on a UE side is shown in FIG. 8. An MN and an SN have respective RRC layers, which are respectively RRC1 and RRC2, and a control plane protocol stack is complete RRC/PDCP/RLC/MAC/PHY. A RAT of the MN is LTE, and a RAT of the SN is NR. For an MR-DC split bearer (split bearer), a user plane protocol stack is SDAP/PDCP/RLC/MAC/PHY. One PDCP entity is connected to both RLC/MAC/PHY of the MN and RLC/MAC/PHY of the SN. The PDCP may perform data splitting to improve an instantaneous rate of the terminal device (for example, data packets 1/3/5/... are transmitted through the MN, and data packets 2/4/6/... are transmitted through the SN), and the PDCP may also perform packet replication to improve reliability (for example, data packets 1/2/3/... are transmitted through the MN, and the data packets 1/2/3/... are transmitted through the SN).

An NR standard supports MR-DC, and a subsequent NR release is also evolved based on MR-DC.

However, X-RAT CA (that is, multi-radio carrier aggregation (multi radio-carrier aggregation, MR-CA)) requires ideal backhaul between an LTE base station and an NR base station (generally, only an optical fiber can meet this requirement). In most countries or regions, optical fiber deployment is extremely scarce. Therefore, an actual deployment probability of X-RAT CA is low. Therefore, MR-CA is not supported in the NR standard currently.

In conclusion, currently, MR-DC does not support aggregation between a plurality of carriers, and cannot support CA features such as dynamic/real-time scheduling negotiation between different carriers, cross-carrier scheduling, and joint UCI feedback. Therefore, communication performance is relatively poor.

In view of this, embodiments of this application provides a communication method. The communication method can support aggregation between carriers in different RATs, for example, support MR-CA. Access nodes may communicate with each other, to implement a CA feature and improve communication performance. In a possible scenario of embodiments of this application, ideal backhaul is implemented between nodes (for example, the nodes are deployed by using an optical fiber, or a low-latency cable is deployed when the nodes are co-site), and time of transmission between the nodes is short (for example, less than 1 millisecond (ms)).

The communication method provided in embodiments of this application may be applied to the communication systems shown in FIG. 3 and FIG. 4. FIG. 9 shows a possible communication method according to an embodiment of this application. The communication method may implement communication between access nodes in an MR-CA protocol stack, and include the following steps.

S901: A first access node determines scheduling information.

It may be understood that in this embodiment of this application, the first access node may be a scheduling node, a scheduled node, or a third-party node, and a second access node may be a scheduling node, a scheduled node, or a third-party node. Herein, that the first access node is a scheduling node and the second access node is a scheduled node is used for description. A RAT of the first access node may be the same as or different from a RAT of the second access node.

The "RAT" in embodiments of this application may be any RAT or system, for example, 3G/wideband code division multiple access (wideband code division multiple access, WCDMA)/universal mobile telecommunications system (universal mobile telecommunications system, UMTS)/code division multiple access (code division multiple access, CDMA)/time division-synchronous code division multiple access (time division-synchronous code division multiple access, TD-SCDMA), 4G/LTE, 5G/NR, 6G, or 7G.

The scheduling information may indicate resource information to be used by the second access node to receive data or send data.

The scheduling information may include downlink scheduling information, the downlink scheduling information may indicate resource information for sending data, and the resource information for sending data is downlink resource information. The downlink scheduling information is used to generate downlink scheduling configuration information, and the downlink scheduling configuration information may be used to allocate downlink resource information to a terminal device. Optionally, the scheduling information may include a scheduling result, and/or intermediate information (if any) used to generate downlink scheduling configuration information, and/or downlink scheduling configuration information. For example, the downlink scheduling configuration information is DCI (which is also referred to as a DCI format or a DCI container), and intermediate information used to generate the DCI is one or more DCI elements. The DCI may include one or more DCI elements, and the DCI elements may be generated based on the scheduling result. The scheduling information may be the scheduling result, or the scheduling information may include one or more DCI elements, or the scheduling information may include DCI.

The scheduling information may include uplink scheduling information, the uplink scheduling information may indicate resource information for receiving data, and the resource information for receiving data is uplink resource information. The uplink scheduling information is used to generate uplink scheduling configuration information, and the uplink scheduling configuration information may be used to allocate uplink resource information to a terminal device. The uplink scheduling information may include but is not limited to one or more of the following: scheduling information of a random access channel (random access channel, RACH), scheduling information of a scheduling request (scheduling request, SR), scheduling information of a buffer status report (buffer status report, BSR), or scheduling information of CSI. Optionally, the scheduling information may include a scheduling result, and/or intermediate information (if any) used to generate uplink scheduling configuration information, and/or uplink scheduling configuration information.

As a scheduling node, the first access node may generate a scheduling result.

In a possible manner, if the scheduling information includes one or more DCI elements or DCI, in S901, the first access node may generate the one or more DCI elements or generate the DCI based on the scheduling result.

In another possible manner, in S901, the first access node may receive scheduling information from another access node (for example, the second access node). For example, the first access node sends first request information to the another access node, where the first request information is for requesting the scheduling information, and the another access node sends the scheduling information to the first access node. Optionally, the first request information includes the scheduling result (for example, when the another access node cannot generate a scheduling result). In some possible cases, if the first access node has no capability of generating a DCI element, the first request information may be for requesting to generate a DCI element; or if the first access node has no capability of generating DCI, the first request information may be for requesting to generate DCI.

The scheduling result includes but is not limited to at least one piece of the following information: scheduling resource information, a modulation and coding scheme (modulation and coding scheme, MCS), transmit power control (transmit power control, TPC), triggered (triggered) CSI/SRS, a redundancy version (redundancy version, RV), a HARQ process identifier (HARQ process id), a network device interface (network device interface, NDI), an antenna port, and the like.

The DCI may include but is not limited to at least one piece of the following information: DCI format indication information (indicating uplink or downlink), a carrier indicator (carrier indicator) field, a bandwidth part indicator (bandwidth part indicator), frequency domain resource allocation, time domain resource allocation, a frequency domain frequency hopping indicator, virtual resource block (virtual resource block, VRB)-to-physical resource block (physical resource block, PRB) mapping (VRB-to-PRB mapping), a physical resource block bundling size indicator (PRB bundling size indicator), an MCS, a new data indicator (New data indicator), a redundancy version (Redundancy version, RV), a quantity of HARQ processes (HARQ process number), HARQ timing, a transmit power control command (TPC command for scheduled PUSCH), an uplink or supplementary uplink (supplementary uplink, SLTL) indicator (UL/SUL indicator), precoding information and a quantity of layers (Precoding information and number of layers), an antenna port (Antenna ports), an SRS resource indicator (SRS resource indicator), an SRS request (SRS request), a CSI request (CSI request), code block group (code block group, CBG) transmission information (CBG transmission information, CBGTI), a phase tracking reference signal (phase-tracking reference signal, PTRS)-demodulation reference signal (demodulation reference signal, DMRS) association (PTRS-DMRS association), DMRS sequence initialization (DMRS sequence initialization), an open-loop power control parameter set indication (Open-loop power control parameter set indication), a priority indicator (Priority indicator), an invalid symbol pattern indicator (Invalid symbol pattern indicator), a minimum applicable scheduling offset indicator (Minimum applicable scheduling offset indicator), a secondary cell dormancy indication (SCell dormancy indication), a downlink assignment index (Downlink assignment index), a beta offset indicator (beta_offset indicator), a UL-synchronization channel (synchronization channel, SCH) indicator, a PUCCH resource indicator (PUCCH resource indicator), channel access (ChannelAccess-CPext), a rate matching indicator (Rate matching indicator), a zero power channel state information-reference signal trigger (zero power channel state information-reference signal, ZP CSI-RS trigger), a one-shot HARQ request (One-shot HARQ-ACK request), a PDSCH group index (PDSCH group index), a new feedback indicator (New feedback indicator), a number of requested PDSCH groups (Number of requested PDSCH group(s)), and a transmission configuration indication (Transmission configuration indication).

S902: The first access node sends the scheduling information to the second access node, and the second access node receives the scheduling information.

The first access node may interact with the second access node in a first communication manner. The first communication manner supports carrier aggregation between different RATs. In the first communication manner, communication may be performed based on a first protocol stack. Optionally, the first protocol stack may be obtained by improving an existing protocol stack (for example, an MR-DC protocol stack), to support the first communication manner. The first protocol stack is described in subsequent embodiments.

S903: The second access node determines the resource information for receiving data or sending data.

The second access node may determine, according to an indication of the scheduling information, the resource information to be used by the second access node to receive data or send data, that is, determine uplink resource information or downlink resource information.

Optionally, the second access node may send, to the terminal device in a dynamic scheduling or semi-persistent scheduling manner, the resource information used by the second access node to receive data or send data. The second access node and the terminal device may interact based on the resource information for receiving data or the resource information for sending data by the second access node.

For example, the second access node sends, to the terminal device in a dynamic scheduling manner, the resource information used by the second access node to send data. The second access node may send DL dynamic grant (dynamic grant, DG) configuration information, where the DL DG configuration information includes the resource information used by the second access node to send data. For example, the DL DG configuration information is DCI.

If the scheduling information includes one or more DCI elements, after receiving the scheduling information, the second access node may generate DCI based on the one or more DCI elements, and send the DCI to the terminal device. If the scheduling information includes DCI, after receiving the scheduling information, the second access node sends (transparently sends/transparently transmits) the DCI to the terminal device.

For another example, the second access node sends, to the terminal device in a semi-persistent scheduling manner, the resource information used by the second access node to send data. The second access node may send DL SPS information or send DL CG configuration information, where the DL SPS information or the DL CG configuration information includes the resource information used by the second access node to send data.

For another example, the second access node sends, to the terminal device in a dynamic scheduling manner, the resource information used by the second access node to receive data. The second access node may send UL DG configuration information, where the LTL DG configuration information includes the resource information used by the second access node to receive data.

For another example, the second access node sends, to the terminal device in a semi-persistent scheduling manner, the resource information used by the second access node to receive data. The second access node may send UL SPS information or UL CG configuration information, where the UL SPS information or the UL CG configuration information includes the resource information used by the second access node to send data.

Optionally, in a cross-carrier scheduling scenario, or in a case in which the first access node is not a scheduling node, the first access node may further receive other scheduling information from another node. The other scheduling information may indicate resource information to be used by the first access node to receive data or send data. The first access node may send, to the terminal device in a dynamic scheduling or semi-persistent scheduling manner, the resource information used by the first access node to send data or receive data.

The DL SPS information, the DL CG configuration information, the UL SPS information, or the UL CG configuration information may include but is not limited to at least one piece of the following information: frequency hopping or not (frequencyHopping), cg-DMRS-Configuration, an MCS table (mcs-Table), a semi-persistent or dynamic UCI configuration (uci-OnPUSCH), a resource allocation type (resourceAllocation), an RBG size (rbg-Size), a power control selection (powerControlLoopToUse), a power control parameter configuration such as P0 and Alpha (p0-PUSCH-Alpha), a transform precoder (transformPrecoder), a quantity of parallel HARQ processes (nrofHARQ-Processes), a quantity of repetitions (repK), an RV version number corresponding to each repetition (repK-RV), a CG time domain periodicity (periodicity), a timer duration configuration (configuredGrantTimer), a time offset (timeDomainOffset), time domain allocation (timeDomainAllocation), frequency domain allocation (frequencyDomainAllocation), an antenna port (antennaPort), DMRS sequence initialization (dmrs-SeqInitialization), precoding and a quantity of layers (precoding And Number Of Layers), an SRS resource identifier (srs-ResourceIndicator), an MCS and transport block size (transport block size, TBS) (mcsAndTBS), a frequency domain frequency hopping offset (frequencyHoppingOffset), a pathloss reference index (pathlossReferenceIndex), a PUSCH repetition type identifier (pusch-RepTypeIndicator-r16), a PUSCH frequency hopping repetition type (frequencyHoppingPUSCH-RepTypeB-r16), and a time reference system frame number (system frame number, SFN) (timeReferenceSFN-r16).

Optionally, the first access node and the second access node may further exchange data information, including DL data information and/or LTL data information.

The DL data information is mainly used for description herein. When the first access node is a data source node, the first access node may send data information to another access node (for example, the second access node). The data information is data information of the another access node. For example, the data information is data information of the second access node.

The data information may be (unprocessed) user data. Alternatively, the data information may be an RLC protocol data unit (protocol data unit, PDU) obtained by the first access node processing user data. Optionally, an RLC entity of the first access node processes the user data to obtain the RLC PDU. Alternatively, the data information may be a MAC sub (Sub) PDU obtained by the first access node processing user data. Optionally, a MAC entity of the first access node adds a MAC subheader (subheader) to the RLC PDU or a MAC service data unit (service data unit, SDU) to obtain the MAC SubPDU. Alternatively, the data information may be a MAC PDU obtained by the first access node processing user data. Optionally, the MAC entity of the first access node concatenates one or more MAC SubPDUs to obtain the MAC PDU, where the MAC PDU is also referred to as a MAC transport block (transport block, TB). Alternatively, the data information may be RV version data obtained by the first access node processing user data. Optionally, the RV version data includes but is not limited to information such as the user data and an RV version number.

Optionally, the another access node may send second request information to the first access node, where the second request information is for requesting the data information. After receiving the second request information, the first access node may send the data information to the another access node. The another access node may request the data information from the first access node per (per) transmission time interval (transmission time interval, TTI) (per TTI). For example, the another access node may send the second request information to the first access node once every TTI. Alternatively, the another access node may request data information scheduled by the first access node at a plurality of TTIs. For example, the another access node may send the second request information to the first access node once, where the second request information is for requesting the data information at the plurality of TTIs.

The second request information includes but is not limited to at least one piece of the following information: a user identifier (UE id, such as a cell radio network temporary identifier (cell-radio network temporary identifier, C-RNTI)), an RV version number (the first access node may send RV version data), information for requesting a MAC PDU (the first access node may send the MAC PDU), a TBS, an RLC PDU size, grant information (grant info), a logical channel (logical channel, LCH) identifier list (LCH id list) that meets a condition, and information related to a logical channel prioritization (Logical Channel Prioritization, LCP) restriction (restriction). The information related to the LCP restriction includes but is limited to at least one piece of the following information: a subcarrier spacing (sub-carrier spacing, SCS)/grant free (grant free, GF) type (type) 1, PUSCH duration, a serving cell identifier (Serving Cell id(s)), a cell group identifier (cell group id, CG id), a physical layer priority index (PHY priority index), and the like.

If the second access node is a data transmission node, the first access node may further send logical channel information to the second access node, where the logical channel information is related to an LCH of a user to which the user data belongs. For example, the logical channel information includes but is not limited to at least one piece of the following information: an LCH priority, token bucket size duration (bucket size duration, BSD) of an LCH, a prioritized bit rate (prioritized bit rate, PBR) of the LCH, and the like, where the token BSD of the LCH is also referred to as a token bucket depth of the LCH. The second access node may determine, based on the logical channel information, an amount of data to be sent to the terminal device, and then send data information/user data of the data amount, so that communication performance can be further improved. For a process in which the first access node determines the logical channel information, refer to a token bucket mechanism on a LTE-universal terrestrial radio access network (UE-Universal Terrestrial Radio Access Network, Uu) (an interface). Details are not described herein.

Optionally, the resource information to be used by the second access node to receive data or send data includes indication information used for retransmission. For example, the DCI includes the indication information used for retransmission. When the data information is user data, or the data information is an RLC PDU obtained by the first access node processing user data, or the data information is a MAC SubPDU obtained by the first access node processing user data, or the data information is a MAC PDU obtained by the first access node processing user data, the first access node may resend the data information to the second access node. Optionally, before the second access node receives the resent data information, the first access node may resend the scheduling information. When the data information is RV version data obtained by the first access node processing user data, the first access node may generate new RV version data, and send the new RV version data to the second access node.

When the first access node is not a data source node (for example, a data transmission node), the first access node may receive data information from another access node (for example, the second access node). The data information is data information of the first access node.

The data information may be (unprocessed) user data. Alternatively, the data information may be an RLC PDU obtained by the second access node processing user data. Alternatively, the data information may be a MAC SubPDU obtained by the second access node processing user data. Alternatively, the data information may be a MAC PDU obtained by the second access node processing user data. Alternatively, the data information may be RV version data obtained by the second access node processing user data.

Optionally, the resource information to be used by the second access node to receive data or send data includes indication information used for retransmission. For example, the DCI includes the indication information used for retransmission. When the data information is user data, or the data information is an RLC PDU obtained by the second access node processing user data, or the data information is a MAC SubPDU obtained by the second access node processing user data, or the data information is a MAC PDU obtained by the second access node processing user data, the first access node may resend the scheduling information to the second access node, and the second access node may resend the data information to the terminal device. When the data information is RV version data obtained by the second access node processing user data, the second access node may generate new RV version data, and send the new RV version data to the first access node, and the first access node sends the new RV version data to the terminal device.

Optionally, the scheduling information includes an RV version number.

Optionally, the terminal device may report a feedback result of the data information. For example, the terminal device may send the feedback result to the second access node, to indicate that the terminal device successfully receives the data information or fails to receive the data information. The second access node may send feedback information to the first access node, where the feedback information is used to feed back a data information sending success or failure. If data information retransmission is determined based on the feedback information, processing may be performed based on the foregoing case in which the resource information to be used by the second access node to receive data or send data includes the indication information used for retransmission. Details are not described herein again.

For example, the feedback information includes but is not limited to at least one piece of the following information: a RAT identifier (RAT id), a frequency identifier (Freq id), a carrier identifier (CC id), a cell identifier (Cell id), a user identifier (UE id), an ACK/NACK time-frequency domain position, a HARQ process identifier (HARQ process id), and an ACK/NACK/discrete transmission (discrete transmission, DTX) result. Optionally, the ACK/NACK time-frequency domain position and the HARQ process ID may be used alternatively. The ACK indicates that the terminal device successfully receives the data information, and the first access node and the second access node may not retransmit the data information. The NACK indicates that the terminal device fails to receive the data information, and the first access node and the second access node may retransmit the data. The DTX indicates that no ACK/NACK feedback information of the terminal device is received. In this case, the first access node and the second node may retransmit or not retransmit the data information.

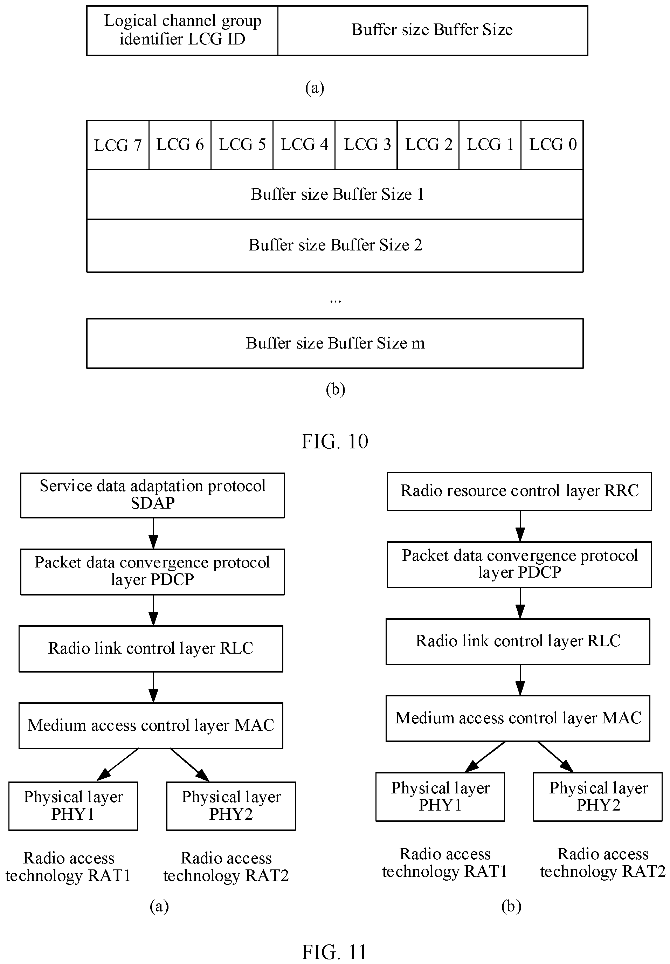

Optionally, the first access node and the second access node may further receive uplink information. The uplink information includes at least one piece of the following information: random access channel information, a scheduling request, a buffer status report, or channel state information. The random channel access information (RACH information) may include a time-frequency domain position and a preamble identifier (preamble id) of a random access preamble resource (preamble resource). The scheduling request (SR information) may include one or more pieces of the following information: a time-frequency domain position of a scheduling request resource (in this case, the access node learns in advance an association relationship between an SR and an LCH(s) or an LCG(s)), a user identifier (for example, a C-RNTI) corresponding to the scheduling request resource, or a logical channel identifier or a logical channel group identifier (for example, an LCH(s) ID, an LCH(s) priority, or an LCG(s) ID) corresponding to the scheduling request resource. The buffer status report may include BSR original information (for example, including a RAT ID, a CC ID, a cell ID, a UE ID, an LCG ID, and a buffer size), or a BSR container (which is obtained by processing the BSR original information, and may be transparently transmitted directly). The channel state information may include uplink channel state information and/or downlink channel state information. The uplink channel state information may include at least one piece of the following information: a RAT ID, a CC ID, a cell ID, a LTE ID, CSI original information, and a CSI container. The downlink channel state information may include at least one piece of the following information: a RAT ID, a CC ID, a cell ID, a UE ID, an SRS measurement result, and an SRS ID. The BSR may include a long format and a short format. (a) in FIG. 10 shows a possible BSR format (short format). A BSR includes one logical channel group (logic channel group, LCG) ID field and one buffer size (Buffer Size) field, the LCG ID field is a logical channel group identifier, and the buffer size field is an identifier of a data amount range. (b) in FIG. 10 shows another possible BSR format (for example, a long format). A BSR includes a plurality of LCG ID fields (for example, seven LCGs) and a plurality of buffer size fields (for example, m buffer size fields).

In this embodiment of this application, scheduling or interconnection and interworking for user data or the like may be performed between different access nodes, so that communication performance can be improved. In addition, interconnection and interworking between access nodes in different RATs may be further implemented, and interconnection and interworking between access nodes of different vendors may also be implemented. This implements a CA feature and further improves communication performance.

An embodiment of this application further provides a first protocol stack. The first protocol stack is applicable to a network side and a terminal device side. An example in which a first access node and a second access node are used and the first protocol stack is MR-CA is used for description. A RAT of the first access node may be the same as or different from a RAT of the second access node.

In a possible MR-CA protocol stack, one MAC entity may be connected to a plurality of PHY entities in different RATs. An SDAP entity, a PDCP entity, and an RLC entity corresponding to a DRB and/or a logical channel (logical channel, LCH) share one MAC entity. An RRC entity, a PDCP entity, and an RLC entity corresponding to a control plane share one MAC entity.

A user plane protocol stack model on the network side is shown in (a) in FIG. 11. A PHY1 entity of the first access node and a PHY2 entity of the second access node are separately connected to a MAC entity, an RLC entity, a PDCP entity, and an SDAP entity. A RAT of the first access node is RAT1, and a RAT of the second access node is RAT2. RAT1 and RAT2 may be the same or different.

Optionally, the PHY1 entity, the MAC entity, the RLC entity, the PDCP entity, and the SDAP entity may all belong to the first access node, and the PHY2 entity belongs to the second access node. Alternatively, the PHY1 entity belongs to the first access node, and the PHY2 entity, the MAC entity, the RLC entity, the PDCP entity, and the SDAP entity may all belong to the second access node.

If the PHY1 entity and the MAC entity both belong to the first access node, the PHY2 entity belongs to the second access node, the PHY2 entity and the MAC entity exchange information through an inter-base station interface between the first access node and the second access node, and the interface between the PHY2 entity and the MAC entity may be a private interface (for example, in a case in which the PHY2 entity, the PHY1 entity, the MAC entity, the RLC entity, the PDCP entity, and the SDAP entity belongs to a same vendor), or may be a standardized interface (for example, in a case in which the PHY2 entity, the PHY1 entity, the MAC entity, the RLC entity, the PDCP entity, and the SDAP entity belong to different vendors).

A control plane protocol stack model on the network side is shown in (b) in FIG. 11. A difference between the control plane protocol stack model and the user plane protocol stack model lies in that the control plane protocol stack model includes an RRC entity, and the user plane protocol stack model includes an SDAP entity. Similarities are not described again.

A user plane protocol stack model and a control plane protocol stack model on a terminal device side are similar to the user plane protocol stack model and the control plane protocol stack model on the network side. A difference lies in that a PHY2 entity, a PHY1 entity, a MAC entity, an RLC entity, a PDCP entity, and an SDAP entity in a terminal device belong to a same vendor. Therefore, an interface between the PHY2 entity, the PHY1 entity, and the MAC entity may be implemented by using a private interface, or may be implemented by using a standardized interface.

However, for the terminal device, in the protocol stack model on the network side, one MAC entity is associated with a plurality of PHY entities, and may be associated with configurations of one or more DRBs/LCHs. One DRB is associated with one PDCP entity, and each LCH is associated with one RLC entity. A first DRB may be associated with at least one LCH, that is, a first PDCP entity may be associated with a plurality of RLC entities.

In a possible MR-CA protocol stack, PHY entities in different RATs are connected to respective corresponding MAC entities. ADRB and/or an LCH are/is connected to one MAC entity. Different MAC entities are connected and interact with each other through an interface. An SDAP entity, a PDCP entity, and an RLC entity corresponding to a user plane share one MAC entity. An RRC entity, a PDCP entity, and an RLC entity on a control plane share one MAC entity. A RAT of the first access node is RAT1, and a RAT of the second access node is RAT2. RAT1 and RAT2 may be the same or different.

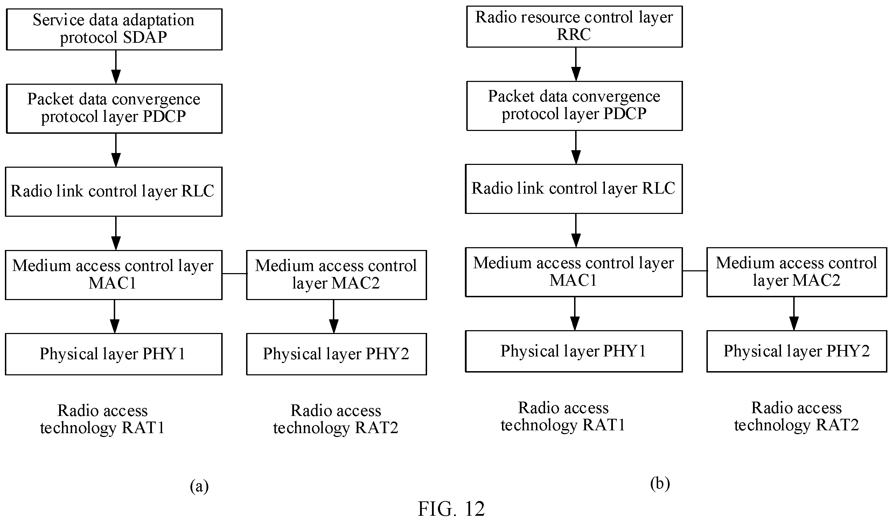

A user plane protocol stack on the network side is shown in (a) in FIG. 12. A PHY1 entity of the first access node is connected to a MAC 1 entity of the first access node, a PHY2 entity of the second access node is connected to a MAC2 entity of the second access node, and the MAC 1 entity and the MAC2 entity may exchange information through an inter-base station interface between the first access node and the second access node. An RLC entity, a PDCP entity, and an SDAP entity are connected to the MAC1 entity or the MAC2 entity.

Optionally, the PHY1 entity, the MAC1 entity, the RLC entity, the PDCP entity, and the SDAP entity may all belong to the first access node, and the PHY2 entity and the MAC2 entity belong to the second access node. The first access node and the second access node may exchange information about a PHY entity and information about a MAC entity. An interface between the MAC1 entity and the MAC2 entity may be a private interface, or may be a standardized interface.

A control plane protocol stack model on the network side is shown in (b) in FIG. 12. A difference between the control plane protocol stack model and the user plane protocol stack model lies in that the control plane protocol stack model includes an RRC entity, and the user plane protocol stack model includes an SDAP entity. Similarities are not described again.

A user plane protocol stack model and a control plane protocol stack model on a terminal device side are similar to the user plane protocol stack model and the control plane protocol stack model on the network side. A difference lies in that a PHY2 entity, a PHY1 entity, a MAC entity, an RLC entity, a PDCP entity, and an SDAP entity in a terminal device belong to a same vendor. Therefore, an interface between the MAC1 entity and the MAC2 entity may be implemented by using a private interface, or may be implemented by using a standardized interface.

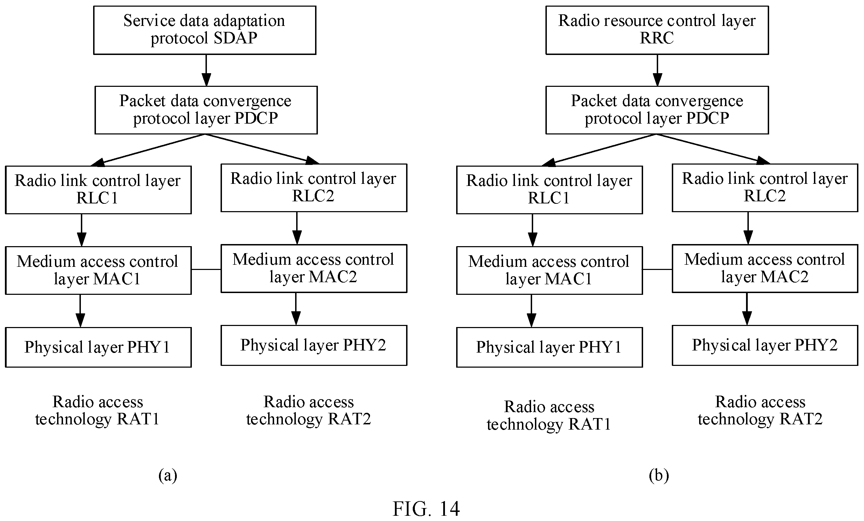

However, for the terminal device, there are a plurality of MAC entities in the protocol stack model on the network side, and each MAC entity is associated with one PHY entity. One of the plurality of MAC entities is associated with one or more DRB/LCH configurations. The network side may explicitly/implicitly configure, for the terminal device, an interface between two MAC entities. For this process, refer to the configuration process of the first configuration information in FIG. 14, and details are not described herein again.

In a possible MR-CA protocol stack, PHY entities in different RATs are connected to respective corresponding MAC entities. A DRB and/or an LCH are/is connected to different MAC entities. Different MAC entities are connected and interact with each other through an interface. An SDAP entity, a PDCP entity, and an RLC entity corresponding to a user plane share a plurality of MAC entities. An RRC entity, a PDCP entity, and an RLC entity on a control plane share a plurality of MAC entities. A RAT of the first access node is RAT1, and a RAT of the second access node is RAT2. RAT1 and RAT2 may be the same or different.

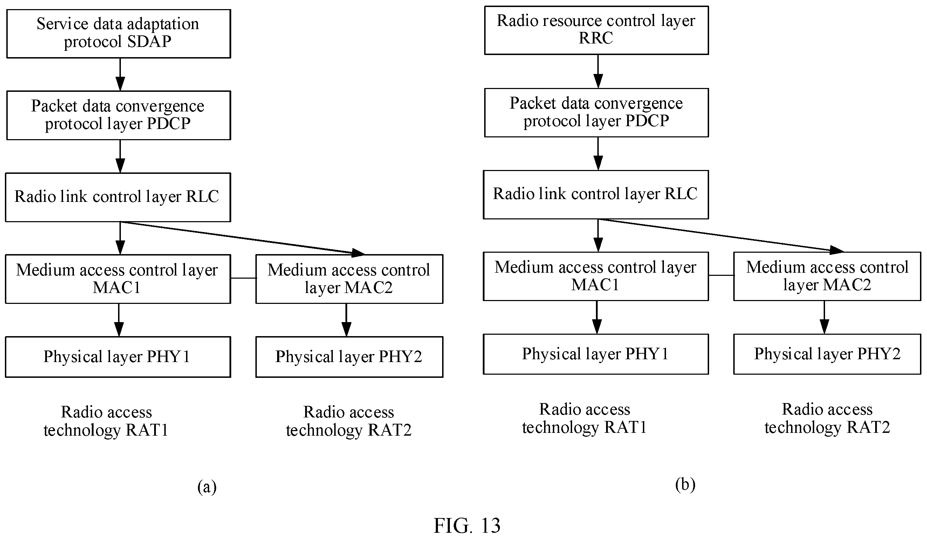

A user plane protocol stack on the network side is shown in (a) in FIG. 13. A PHY1 entity of the first access node is connected to a MAC 1 entity of the first access node, a PHY2 entity of the second access node is connected to a MAC2 entity of the second access node, and the MAC1 entity and the MAC2 entity may exchange information through an inter-base station interface between the first access node and the second access node. An RLC entity, a PDCP entity, and an SDAP entity are separately connected to the MAC 1 entity and the MAC2 entity.

Optionally, the PHY1 entity, the MAC1 entity, the RLC entity, the PDCP entity, and the SDAP entity may all belong to the first access node, and the PHY2 entity and the MAC2 entity belong to the second access node. The first access node and the second access node may exchange information about a PHY entity and information about a MAC entity and an RLC entity. An interface between the MAC1 entity and the MAC2 entity may be a private interface, or may be a standardized interface. An interface between the RLC entity and the MAC2 entity may be a private interface, or may be a standardized interface.

A control plane protocol stack model on the network side is shown in (b) in FIG. 13. A difference between the control plane protocol stack model and the user plane protocol stack model lies in that the control plane protocol stack model includes an RRC entity, and the user plane protocol stack model includes an SDAP entity. Similarities are not described again.

A user plane protocol stack model and a control plane protocol stack model on a terminal device side are similar to the user plane protocol stack model and the control plane protocol stack model on the network side. A difference lies in that a PHY2 entity, a PHY1 entity, a MAC entity, an RLC entity, a PDCP entity, and an SDAP entity in a terminal device belong to a same vendor. Therefore, an interface between the MAC1 entity, the MAC2 entity, and the RLC entity may be implemented by using a private interface, or may be implemented by using a standardized interface.

However, for the terminal device, there are a plurality of MAC entities in the protocol stack model on the network side, and each MAC entity is associated with one PHY entity. Each of the plurality of MAC entities is associated with one or more DRB/LCH configurations. The network side may explicitly/implicitly configure, for the terminal device, an interface between two MAC entities. For this process, refer to the configuration process of the first configuration information in FIG. 14, and details are not described herein again.

In a possible MR-CA protocol stack, PHY entities in different RATs are connected to respective corresponding MAC entities/RLC entities. A DRB and/or an LCH are/is connected to different MAC entities. Different MAC entities are connected and interact with each other through an interface. An SDAP entity and a PDCP entity corresponding to a user plane share a plurality of MAC entities. An RRC entity and a PDCP entity on a control plane share a plurality of MAC entities. A RAT of the first access node is RAT1, and a RAT of the second access node is RAT2. RAT1 and RAT2 may be the same or different.

A user plane protocol stack on the network side is shown in (a) in FIG. 14. A PHY1 entity of the first access node is connected to a MAC1 entity of the first access node, and the MAC1 entity is connected to an RLC 1 entity of the first access node. A PHY2 entity of the second access node is connected to a MAC2 entity of the second access node, and the MAC2 entity is connected to an RLC2 entity of the second access node. The MAC1 entity and the MAC2 entity may exchange information by using an inter-base station interface between the first access node and the second access node. A PDCP entity and an SDAP entity are separately connected to the RLC1 entity and the RLC2 entity.

Optionally, the PHY1 entity, the MAC1 entity, the RLC1 entity, the PDCP entity, and the SDAP entity may all belong to the first access node, and the PHY2 entity, the MAC2 entity, and the RLC2 entity belong to the second access node. The first access node and the second access node may exchange information about a PHY entity and information about a MAC entity. An interface between the MAC1 entity and the MAC2 entity may be a private interface, or may be a standardized interface. An interface between the RLC1 entity, the RLC2 entity, and the PDCP entity may be a private interface, or may be a standardized interface.

A control plane protocol stack model on the network side is shown in (b) in FIG. 14. A difference between the control plane protocol stack model and the user plane protocol stack model lies in that the control plane protocol stack model includes an RRC entity, and the user plane protocol stack model includes an SDAP entity. Similarities are not described again.

A user plane protocol stack model and a control plane protocol stack model on a terminal device side are similar to the user plane protocol stack model and the control plane protocol stack model on the network side. A difference lies in that a PHY2 entity, a PHY1 entity, a MAC entity, an RLC entity, a PDCP entity, and an SDAP entity in a terminal device belong to a same vendor. Therefore, an interface between the MAC1 entity, the MAC2 entity, the RLC1 entity, the RLC2 entity, and the PDCP entity may be implemented by using a private interface, or may be implemented by using a standardized interface.

However, for the terminal device, the network side may explicitly/implicitly configure, for the terminal device, whether there is an interface between two MAC entities, to indicate whether the protocol stack model on the network side is MR-DC or MR-CA. For this process, refer to the configuration process of the first configuration information in FIG. 14. Details are not described herein again.

A difference between the MR-CA protocol stack model shown in (a) in FIG. 14 and (b) in FIG. 14 and the MR-DC protocol stack model lies in whether there is an interface between MAC entities. For example, in the MR-CA protocol stack model, there is an interface between MAC entities, and information may be exchanged. In the MR-DC protocol stack model, there is an interface between RLC entities, and information may be exchanged.

The following uses the protocol stack shown in FIG. 12(a) as an example to describe different scenarios to which embodiments of this application are applicable. A cell served by a network device 1 is a primary cell (primary cell, PCell) in CA, and a cell served by a network device 2 is a secondary cell (secondary cell, SCell) in CA.

A possible scenario is a self-scheduling scenario (as shown in FIG. 1). The self-scheduling scenario may be classified into centralized scheduling and distributed scheduling, and the self-scheduling scenario may be classified into centralized DCI generation and distributed DCI generation. It should be noted that, herein, an example in which downlink resource information is scheduled in a dynamic scheduling manner is mainly used for description. Semi-persistent scheduling and a process of scheduling uplink resource information are similar, and details are not described herein again.

Herein, it is assumed that a scheduler of the PCell is in the PCell. If a scheduler of the SCell is in the PCell (the SCell does not have a scheduling capability and the PCell is a scheduling node), centralized scheduling is performed. If a scheduler of the SCell is in the SCell (the SCell has a scheduling capability and the SCell is a scheduling node), distributed scheduling is performed.

It is assumed that the PCell has a capability of generating a DCI element/DCI. If the SCell has no capability of generating a DCI element/DCI, centralized DCI generation is performed. If the SCell has a capability of generating a DCI element/DCI, distributed DCI generation is performed.

Herein, it is assumed that the network device has a scheduling capability or a capability of generating a DCI element/DCI, or another third-party node may have these capabilities.

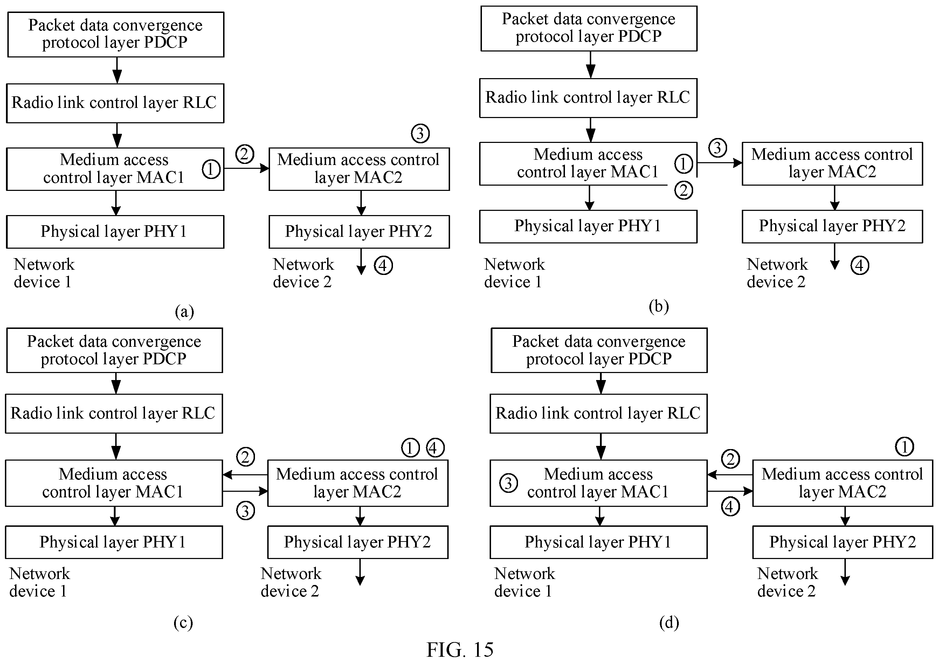

(a) in FIG. 15 shows centralized scheduling and distributed DCI generation.

Step 1 (referring to ① in (a) in FIG. 15): A PCell (or a MAC1 entity of the PCell) generates a scheduling result of an SCell. The scheduling result is used to generate (one or more) DCI elements, and the (one or more) DCI elements may form DCI. The PCell has a scheduling capability, and may be the foregoing first access node, and the SCell may be the foregoing second access node.

Step 2 (referring to ② in (a) in FIG. 15): The PCell (or the MAC1 entity of the PCell) may send the scheduling result or the DCI element to the SCell (or a MAC2 entity of the SCell) through an interface between base stations. For example, the PCell may send the scheduling result or the DCI element to the SCell through a direct interface between the base stations. Alternatively, the PCell may forward the scheduling result or the DCI element to the SCell by using a third-party access node. Alternatively, the PCell may forward the scheduling result or the DCI element to the SCell by using a core network or an operation, administration and maintenance (operation administration maintenance, OAM) network element.

Step 3 (referring to ③ in (a) in FIG. 15): The SCell (or the MAC2 entity of the SCell) generates DCI based on the scheduling result or the DCI element.

Step 4 (referring to ④ in (a) in FIG. 15): The SCell (or the MAC2 entity of the SCell) sends the DCI to a terminal device through an air interface on a carrier on which the SCell is located.

(b) in FIG. 15 shows centralized scheduling and centralized DCI generation.

Step 1 (referring to ① in (b) in FIG. 15): A PCell generates a scheduling result of an SCell. The PCell has a scheduling capability, and may be the foregoing first access node, and the SCell may be the foregoing second access node.

Step 2 (referring to ② in (b) in FIG. 15): The PCell generates DCI for the SCell based on the scheduling result.

Step 3 (referring to ③ in (b) in FIG. 15): The PCell may send the DCI to the SCell through an interface between base stations.

Step 4 (referring to ④ in (b) in FIG. 15): The SCell sends the DCI to a terminal device through an air interface on a carrier on which the SCell is located. The DCI is transparent to both the network device 2 and the SCell. In other words, after receiving the DCI, the SCell may not parse specific information elements included in the DCI and values of the information elements, but may transparently transmit the DCI to the terminal device through the air interface on the carrier on which the SCell is located.

(c) in FIG. 15 shows distributed scheduling and distributed DCI generation.

Step 1 (referring to ① in (c) in FIG. 15): An SCell generates a scheduling result of the SCell. The SCell has a scheduling capability, and may be the foregoing first access node, and a PCell may be the foregoing second access node.

Step 2 (referring to ② in (c) in FIG. 15): When the SCell has no capability of generating a DCI element, the SCell sends request information to the PCell, to request the PCell to generate a DCI element. The request information may include the scheduling result (used to generate a DCI element).

Step 3 (referring to ③ in (c) in FIG. 15): The PCell generates a DCI element for the SCell, and sends the DCI element to the SCell through an interface between base stations.

Step 4 (referring to ④ in (c) in FIG. 15): The SCell generates DCI based on the DCI element, and sends the DCI to a terminal device through an air interface on a carrier on which the SCell is located.

(d) in FIG. 15 shows distributed scheduling and centralized DCI generation.

Step 1 (referring to ① in (d) in FIG. 15): An SCell generates a scheduling result of the SCell. The SCell has a scheduling capability, and may be the foregoing first access node, and a PCell may be the foregoing second access node.

Step 2 (referring to ② in (d) in FIG. 15): When the SCell has no capability of generating DCI, the SCell sends request information to the PCell, to request the PCell to generate DCI. The request information may include the scheduling result (used to generate DCI).

Step 3 (referring to ③ in (d) in FIG. 15): The PCell generates DCI for the SCell, and sends the DCI to the SCell through an interface between base stations.

Step 4 (referring to ④ in (d) in FIG. 15): The SCell sends the DCI to a terminal device through an air interface on a carrier on which the SCell is located.

For the terminal device, the terminal device listens to PDCCH information on the carrier on which the SCell is located. If the terminal device detects DCI that belongs to the terminal device, the terminal device may parse the DCI, and receive user data based on a PDSCH indicated by the DCI. The DCI may be generated by the PCell or the SCell.

If uplink resource information is configured, during dynamic scheduling (UL DG), the DCI may include information such as a time-frequency domain position and an MCS of the current LTL grant, and the terminal device may send uplink data once based on configuration information of LTL DG. During semi-persistent scheduling (LTL SPS/CG), configuration information may include information such as a time-frequency domain position, a periodicity, and an MCS of each UL grant, and the terminal device may send uplink data a plurality of times based on the configuration information of UL SPS/CG. The SCell or the PCell listens to/receives/decodes the uplink data on an uplink resource indicated by the LTL grant. The uplink data may be carried on a PUSCH.

It may be understood that the self-scheduling scenario in (a) in FIG. 12 is applicable to the protocol stacks shown in (b) in FIG. 12, (a) in FIG. 13, (b) in FIG. 13, (a) in FIG. 14, and (b) in FIG. 14. No repeated description is provided. However, in the protocol stacks shown in (a) in FIG. 11 and (b) in FIG. 11, because there is one MAC entity and two PHY entities, the one MAC entity may generate a scheduling result and generate DCI, and then send the DCI to a terminal device through the PHY1 entity or the PHY2 entity.

A possible scenario is a cross-carrier scheduling scenario (as shown in FIG. 1). In the cross-carrier scheduling scenario, configuration information (for example, DCI) of the PCell and the SCell is sent by one node (for example, the PCell), so that overheads caused by sending the configuration information can be reduced. Similar to the self-scheduling scenario, the cross-carrier scheduling scenario may include centralized scheduling and distributed scheduling, and the cross-carrier scheduling scenario includes centralized DCI generation and distributed DCI generation. The protocol stack shown in FIG. 12(a) is used as an example for description.

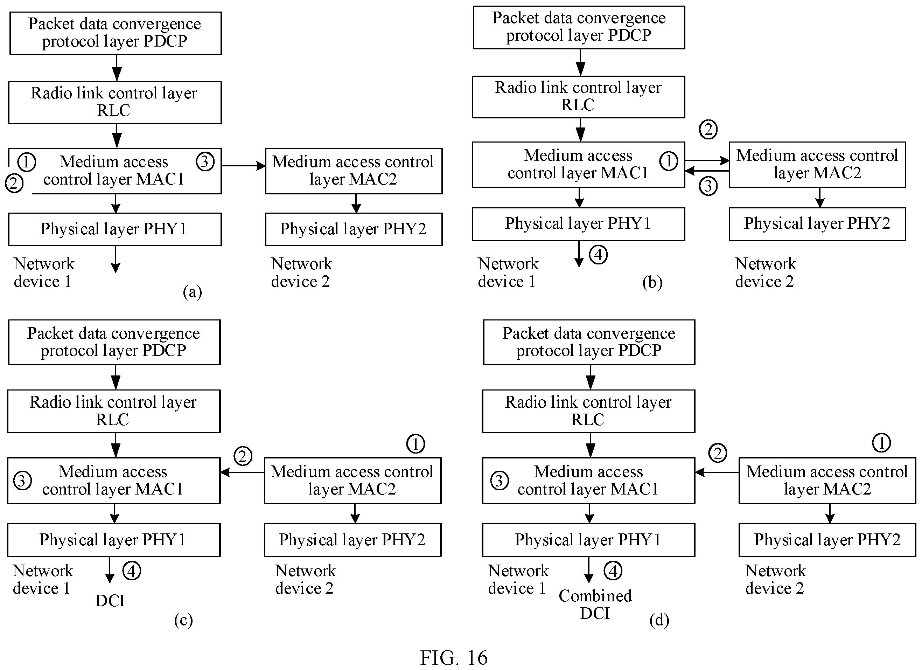

(a) in FIG. 16 shows centralized scheduling and centralized DCI generation.

Step 1 (referring to ① in (a) in FIG. 16): A PCell (or a MAC1 entity of the PCell) generates a scheduling result of an SCell. The PCell has a scheduling capability, and may be the foregoing first access node, and the SCell may be the foregoing second access node.

Step 2 (referring to ② in (a) in FIG. 16): The PCell (or the MAC 1 entity of the PCell) generates DCI for the SCell based on the scheduling result.

Step 3 (referring to ③ in (a) in FIG. 16): The PCell sends the DCI to a terminal device through an air interface on a carrier on which the PCell is located.

DCI of SCells is scheduled in the PCell. Therefore, no DCI is transmitted on a carrier on which the SCell is located. In addition, because a process of generating the scheduling result, a process of generating the DCI, and a process of sending the DCI are all completed in the PCell, and the SCell does not participate in the processes, a network device 1 and a network device 2 may not exchange information.

(b) in FIG. 16 shows centralized scheduling and distributed DCI generation.

Step 1 (referring to ① in (b) in FIG. 16): A PCell generates a scheduling result of an SCell. The PCell has a scheduling capability, and may be the foregoing first access node, and the SCell may be the foregoing second access node.

Step 2 (referring to ② in (b) in FIG. 16): The PCell may send the scheduling result or a DCI element to the SCell through an interface between base stations.

Herein, it is assumed that the PCell has a scheduling capability but has no capability of generating DCI. The PCell may obtain DCI from another network element other than the PCell. For example, the SCell has a capability of generating DCI, and the PCell may obtain the DCI from the SCell.

Step 3 (referring to ③ in (b) in FIG. 16): The SCell generates DCI based on the scheduling result or the DCI element. The SCell may send the DCI to the PCell through the interface between the base stations.

Step 4 (referring to ④ in (b) in FIG. 16): The PCell sends the DCI to a terminal device through an air interface on a carrier on which the PCell is located. After receiving the DCI, the PCell may not parse the DCI, but may transparently transmit the DCI to the terminal device through the air interface on the carrier on which the PCell is located.

(c) in FIG. 16 shows distributed scheduling and centralized DCI generation.

Step 1 (referring to ① in (c) in FIG. 16): An SCell generates a scheduling result of the SCell. The SCell has a scheduling capability, and may be the foregoing first access node, and a PCell may be the foregoing second access node.

Step 2 (referring to ② in (c) in FIG. 16): The SCell may send the scheduling result or a DCI element to the PCell through an interface between base stations.

Herein, it is assumed that the SCell has a scheduling capability but has no capability of generating DCI. The SCell may obtain DCI from another network element other than the SCell. For example, the PCell has a capability of generating DCI, and the SCell may obtain the DCI from the PCell.

Step 3 (referring to ③ in (c) in FIG. 16): The PCell generates DCI based on the scheduling result or the DCI element.

Step 4 (referring to ④ in (c) in FIG. 16): The PCell sends the DCI to a terminal device through an air interface on a carrier on which the PCell is located.

(d) in FIG. 16 shows distributed scheduling and distributed DCI generation.

Step 1 (referring to ① in (d) in FIG. 16): An SCell generates a scheduling result of the SCell. The SCell has a scheduling capability, and may be the foregoing first access node, and a PCell may be the foregoing second access node.

Step 2 (referring to ② in (d) in FIG. 16): The SCell generates DCI based on the scheduling result. The SCell may send the DCI to the PCell through an interface between base stations.

Step 3 (referring to ③ in (d) in FIG. 16): Optionally, the SCell may combine the DCI generated by the SCell and DCI of an SCell (which may include DCI generated by another cell), and send all the DCI to a terminal device through an air interface on a carrier on which the PCell is located.

For the terminal device, the terminal device receives, through the air interface on the carrier on which the PCell is located, the DCI generated by the SCell, but the terminal device may not care whether the DCI is generated by the PCell or the SCell. The terminal device may receive user data based on a PDSCH indicated by the DCI.

It may be understood that the cross-carrier scheduling scenario in (a) in FIG. 12 is applicable to the protocol stacks shown in (b) in FIG. 12, (a) in FIG. 13, (b) in FIG. 13, (a) in FIG. 14, and (b) in FIG. 14. No repeated description is provided. However, in the protocol stacks shown in (a) in FIG. 11 and (b) in FIG. 11, because there is one MAC entity and two PHY entities, the one MAC entity may generate a scheduling result and generate DCI, and then send the DCI to a terminal device through the PHY1 entity or the PHY2 entity.

A possible scenario is a data exchange scenario, and data information of a user may be sent on a PCell and/or an SCell. The data exchange scenario may be classified into centralized scheduling and distributed scheduling, and the data exchange scenario may be classified into centralized data encapsulation and distributed data encapsulation.

Herein, it is assumed that a scheduler of the PCell is in the PCell. If a scheduler of the SCell is in the PCell (the SCell does not have a scheduling capability and the PCell is a scheduling node), centralized scheduling is performed. If a scheduler of the SCell is in the SCell (the SCell has a scheduling capability and the SCell is a scheduling node), distributed scheduling is performed. However, because a MAC entity of the PCell is connected to an RLC/PDCP/SDAP entity, the PCell can obtain user data, and the PCell may be considered as a data source node.

If a scheduling node is the same as a data encapsulation node, centralized data encapsulation is performed. If a scheduling node is different from a data encapsulation node, distributed data encapsulation is performed. The protocol stack shown in FIG. 12(a) is used as an example for description.

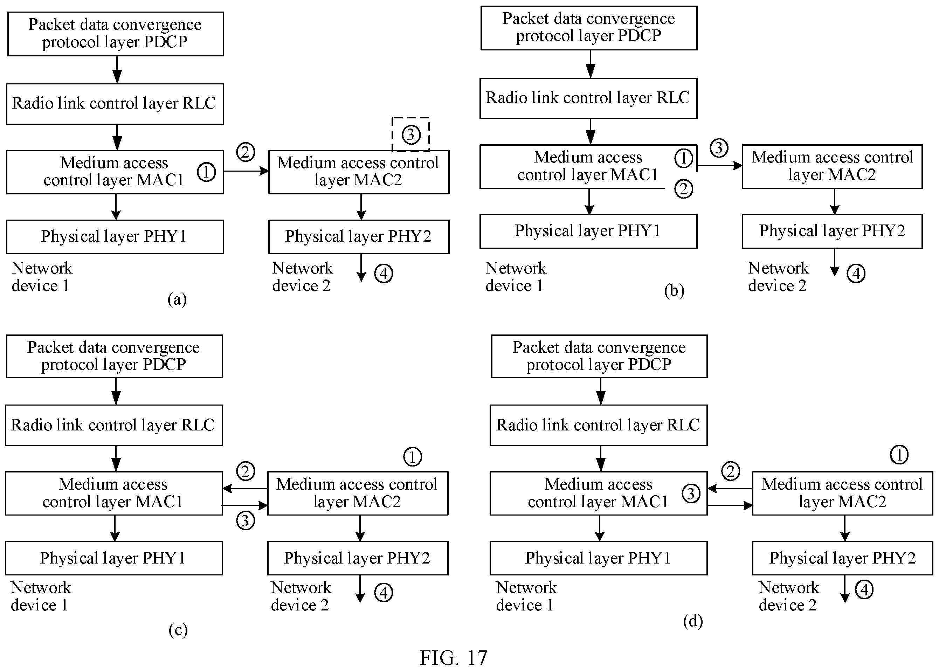

(a) in FIG. 17 shows centralized scheduling and distributed data encapsulation.

Step 1 (referring to ① in (a) in FIG. 17): A PCell (or a MAC1 entity of the PCell) performs data scheduling for an SCell, and generates a data scheduling result of the SCell. The PCell has a data scheduling capability, and may be a data source node, for example, may be the foregoing first access node or the foregoing second access node.

Step 2 (referring to ② in (a) in FIG. 17): The PCell (or the MAC1 entity of the PCell) may send data information to the SCell (or a MAC 12 entity of the SCell) through an interface between base stations.

The MAC1 entity of the PCell obtains an RLC PDU (the RLC PDU includes user data) sent by an RLC entity, and the MAC1 entity may directly transparently transmit the RLC PDU to the SCell without performing processing.

The MAC1 entity of the PCell may alternatively process the RLC PDU, and send data information obtained through processing to the SCell. For example, the MAC1 entity may add a MAC subheader to the RLC PDU (which is also referred to as a MAC SDU or a MAC CE), to obtain a MAC SubPDU, and send the MAC SubPDU to the SCell. For another example, the MAC 1 entity may concatenate one or more MAC SubPDUs to generate a MAC PDU (which is also referred to as a MAC TB), and send the MAC PDU to the SCell.

Optionally, in step 3 (referring to (3) in (a) in FIG. 17), the SCell obtains the MAC PDU based on the data information.

Step 4 (referring to ④ in (a) in FIG. 17): The SCell sends a PDSCH (the PDSCH carries user data) to a terminal device on a carrier on which the SCell is located.

(b) in FIG. 17 shows centralized scheduling and centralized data encapsulation.

Step 1 (referring to ① in (b) in FIG. 17): A PCell generates a data scheduling result of an SCell. The PCell has a data scheduling capability, and may be a data source node, for example, may be the foregoing first access node or the foregoing second access node.

Step 2 (referring to ② in (b) in FIG. 17): The PCell generates a MAC PDU, and obtains RV version data through PHY layer processing.

Step 3 (referring to (3) in (b) in FIG. 17): The PCell may send the RV version data to the SCell through an interface between base stations.

Step 4 (referring to ④ in (b) in FIG. 17): The SCell sends a PDSCH to a terminal device on a carrier on which the SCell is located.

After receiving the MAC PDU in step 3, the SCell may encode and send the MAC PDU by using a PHY2 entity, and no further processing is performed.

(c) in FIG. 17 shows distributed scheduling and distributed data encapsulation.

Step 1 (referring to ① in (c) in FIG. 17): An SCell generates a data scheduling result of the SCell. The SCell has a data scheduling capability, and may be a data source node, for example, may be the foregoing first access node or the foregoing second access node.

Step 2 (referring to ② in (c) in FIG. 17): The SCell may send request information to a PCell through an interface between base stations, to request user data.

A MAC2 entity of the SCell is not connected to an RLC entity, and cannot directly obtain an RLC PDU.

The request information may be for requesting user data scheduled per TTI, or may be for requesting user data scheduled at a plurality of TTIs. The request information may further include scheduling result information generated by the SCell.

Step 3 (referring to (3) in (c) in FIG. 17): Optionally, based on the scheduling result information in step 2, the PCell may send data information to the SCell through the interface between the base stations.

For a similarity, refer to step 2 shown in (a) in FIG. 17.

Step 4 (referring to ④ in (c) in FIG. 17): Optionally, the SCell further performs packet assembly based on the data information to obtain a MAC PDU. The SCell sends a PDSCH to a terminal device on a carrier on which the SCell is located.

(d) in FIG. 17 shows distributed scheduling and centralized data scheduling.

Step 1 (referring to ① in (d) in FIG. 17): An SCell generates a data scheduling result of the SCell. The SCell has a data scheduling capability, and may be a data source node, for example, may be the foregoing first access node or the foregoing second access node.

Step 2 (referring to ② in (d) in FIG. 17): The SCell may send request information to a PCell through an interface between base stations, to request user data.

Optionally, the request information may further include scheduling result information generated by the SCell.

Step 3 (referring to (3) in (d) in FIG. 17): The PCell generates a MAC PDU, obtains RV version data through PHY layer processing, and may send the RV version data to the SCell through the interface between the base stations.

Step 4 (referring to ④ in (d) in FIG. 17): The SCell sends a PDSCH to a terminal device on a carrier on which the SCell is located.

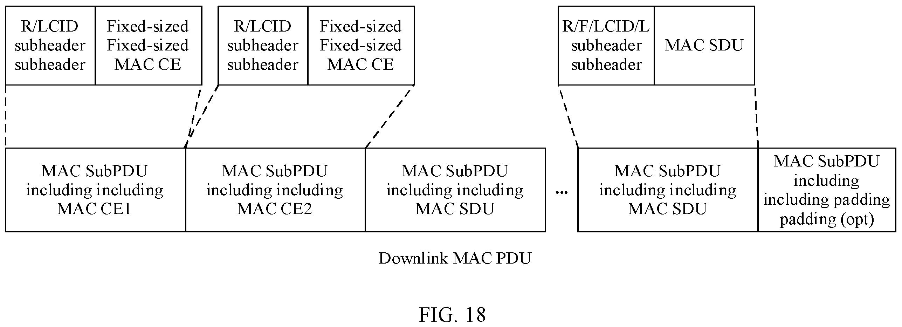

A possible frame structure of the MAC PDU is shown in FIG. 18. The MAC PDU includes a plurality of MAC SubPDUs. The MAC PDU may be a downlink MAC PDU. The MAC SubPDU meets at least one of the following.

At least one MAC SubPDU includes MAC CE1, and the MAC SubPDU that includes MAC CE1 includes a reserved (reserved, R)/logical channel identifier (logical channel identifier, LCID) subheader and a fixed-sized (Fixed-sized) MAC CE.

At least one MAC SubPDU includes MAC CE2, and the MAC SubPDU that includes MAC CE2 includes an R/format (format, F)/LCID/length (length, L) subheader and a variable-sized (Variable-sized) MAC CE.

At least one MAC SubPDU includes a MAC SDU, and the MAC SubPDU that includes the MAC SDU includes an R/F/LCID/L subheader and the MAC SDU.

At least one MAC SubPDU includes a padding (padding) field.

In some cases, for example, if the PCell does not obtain scheduling of the SCell, or the SCell sends a PDSCH supporting a token bucket, the PCell may send LCH information related to a user to the SCell. For a process of determining the LCH information by the PCell, refer to a token bucket mechanism on Uu. Details are not described herein again.

It may be understood that the data exchange scenario in (a) in FIG. 12 is applicable to the protocol stacks shown in (b) in FIG. 12, (a) in FIG. 13, (b) in FIG. 13, (a) in FIG. 14, and (b) in FIG. 14. In (a) in FIG. 13 and (b) in FIG. 13, the MAC2 entity of the SCell is connected to the RLC entity, and may also obtain user data, to implement a function of a data source node. In (a) in FIG. 14 and (b) in FIG. 14, the MAC1 entity of the PCell is connected to the RLC1 entity of the PCell, and may obtain user data of the PCell, to implement a function of a data source node. The MAC2 entity of the SCell is connected to the RLC2 entity of the SCell, and may obtain user data of the SCell, to implement a function of a data source node. However, in the protocol stacks shown in (a) in FIG. 11 and (b) in FIG. 11, because there is one MAC entity and two PHY entities, the one MAC entity may generate a data scheduling result and generate a MAC PDU, and then send a PDSCH to a terminal device through the PHY1 entity or the PHY2 entity. Other similarities are not described in detail.

In a downlink carrier set, a terminal device may receive user data on a PDSCH corresponding to each carrier in CA, and the terminal device attempts to decode the received user data. If the decoding succeeds, the terminal device may feed back a current receiving success (for example, an ACK); or if the decoding fails, the terminal device may feed back a current receiving failure (for example, a NACK).

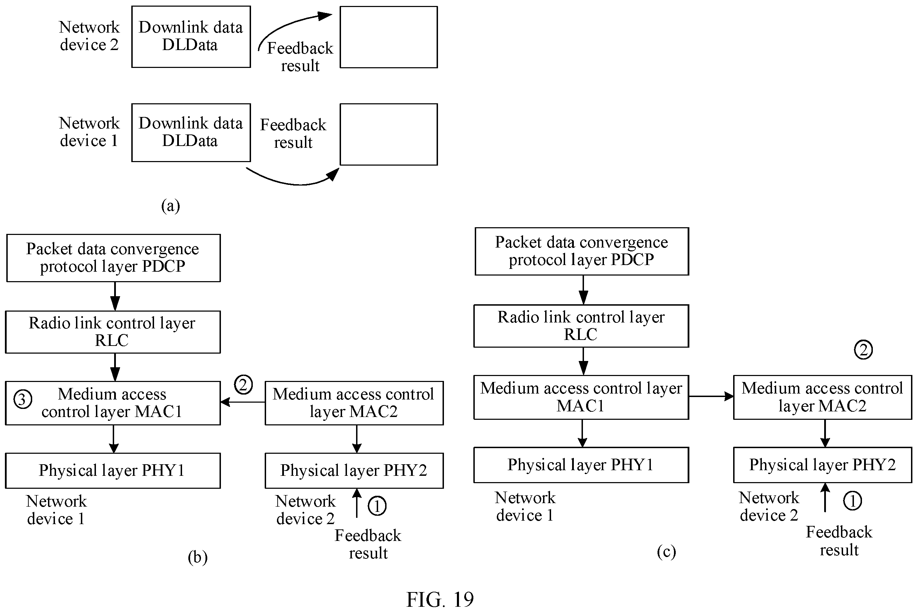

A possible scenario is a distributed feedback scenario, that is, an independent UCI scenario. UCI may carry a feedback result (for example, an ACK/a NACK). In the distributed feedback scenario, a receiving node of a feedback result is the same as a sending node of a PDSCH. As shown in (a) in FIG. 19, a feedback result of a PDSCH on a carrier on which a PCell is located is fed back in a PUCCH on the carrier on which the PCell is located, and a feedback result of a PDSCH on a carrier on which an SCell is located is fed back in a PUCCH on the carrier on which the SCell is located. The PUCCH carries the feedback result. The protocol stack shown in FIG. 12(a) is used as an example for description.

(b) in FIG. 19 shows centralized scheduling. Data scheduling of a PDSCH on a carrier on which an SCell is located is implemented by a PCell, and the SCell delivers the PDSCH on the carrier on which the SCell is located. A PDCCH of the SCell may be delivered by the PCell, or may be delivered by the SCell.

Step 1 (referring to ① in (b) in FIG. 19): The SCell receives a feedback result of the SCell. The SCell may receive the feedback result, the SCell may be the foregoing second access node, and the PCell is the foregoing first access node.

The terminal device receives the PDSCH on the carrier on which the SCell is located, and sends the feedback result on a PUCCH of the SCell.

Step 2 (referring to ② in (b) in FIG. 19): The SCell may send the feedback result to the PCell through an interface between base stations.

The PCell may determine, based on the feedback result, a feedback result of a specific HARQ process of a specific terminal device. The feedback result sent by the SCell to the PCell may include, for example, one or more pieces of the following information: a RAT identifier (RAT id), a frequency identifier (Freq id), a carrier identifier (CC id), a cell identifier (Cell id), a user identifier (UE id), an ACK/NACK time-frequency domain position, a HARQ process identifier (HARQ process id), and an ACK/NACK/discrete transmission (discrete transmission, DTX) result. Optionally, the ACK/NACK time-frequency domain position and the HARQ process ID may be used alternatively. The SCell sends data to the terminal device in a manner of a plurality of processes, and does not need to wait for a feedback result of a PDSCH, but waits for feedback results of the plurality of processes in parallel, so that a communication rate can be improved.

Step 3 (referring to ③ in (b) in FIG. 19): The PCell determines, based on the feedback result, whether to perform retransmission.

For example, when the feedback result is an ACK, retransmission may not be performed, or when the feedback result is a NACK, retransmission may be performed. For another example, when the feedback result is a NACK, retransmission may not be performed, and it may be considered that user data corresponding to the feedback result being the NACK may be discarded, or correctness of a data packet may be ensured depending on retransmission of an upper-layer RLC entity/PDCP entity.

(c) in FIG. 19 shows distributed scheduling. Data scheduling of a PDSCH on a carrier on which an SCell is located is implemented by the SCell.

Step 1 (referring to ① in (c) in FIG. 19): The SCell receives a feedback result. The SCell may receive the feedback result, and the SCell may be the foregoing second access node.

Step 2 (referring to ② in (c) in FIG. 19): The SCell determines, based on the feedback result, whether to perform retransmission.

It may be understood that the distributed feedback scenario in (a) in FIG. 12 is applicable to the protocol stacks shown in (b) in FIG. 12, (a) in FIG. 13, (b) in FIG. 13, (a) in FIG. 14, and (b) in FIG. 14. No repeated description is provided. However, in the protocol stacks shown in (a) in FIG. 11 and (b) in FIG. 11, because there is one MAC entity and two PHY entities, a feedback result may be received by using the PHY1 entity or the PHY2 entity, and the one MAC entity determines whether to perform retransmission.

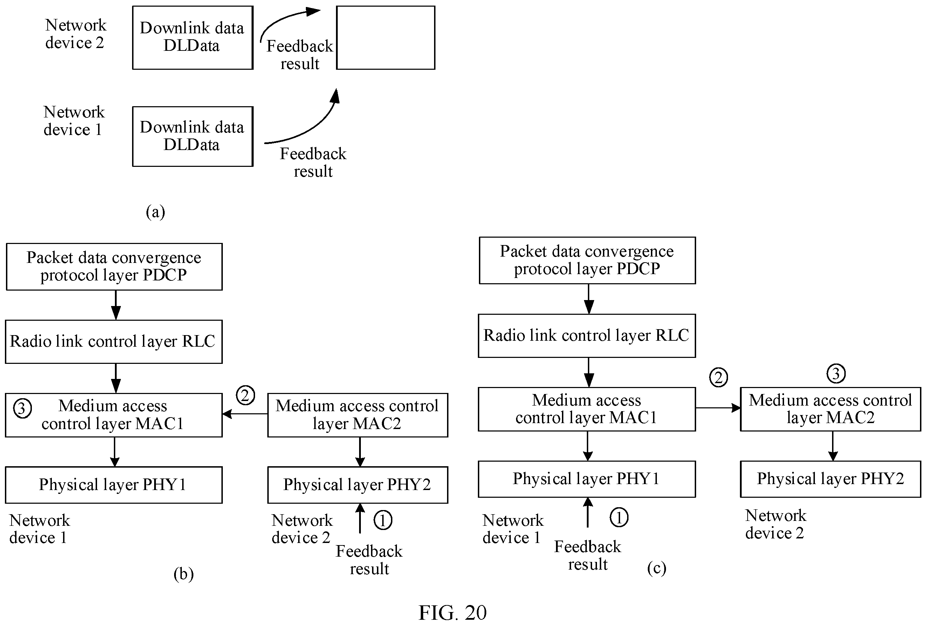

A possible scenario is a centralized feedback scenario, that is, a joint UCI scenario. In the centralized feedback scenario, a receiving node of a feedback result may be different from a sending node of a PDSCH. As shown in (a) in FIG. 20, a feedback result of a PDSCH on a carrier on which a PCell is located is fed back in a PUCCH on a carrier on which an SCell is located, and a feedback result of a PDSCH on the carrier on which the SCell is located is fed back in a PUCCH on the carrier on which the SCell is located. Alternatively, a feedback result of a PDSCH on a carrier on which a PCell is located is fed back in a PUCCH on the carrier on which the PCell is located, and a feedback result of a PDSCH on a carrier on which an SCell is located is fed back in a PUCCH on the carrier on which the PCell is located. The protocol stack shown in FIG. 12(a) is used as an example for description.

(b) in FIG. 20 shows centralized scheduling.

Step 1 (referring to ① in (b) in FIG. 20): An SCell receives a feedback result of a PCell and/or a feedback result of the SCell. The SCell may receive the feedback result, the SCell may be the foregoing second access node, and the PCell is the foregoing first access node.

Step 2 (referring to ② in (b) in FIG. 20): The SCell may send the feedback result to the PCell through an interface between base stations.

Step 3 (referring to (3) in (b) in FIG. 20): The PCell may determine, based on the feedback result, whether to perform retransmission.

In step 3, the PCell may determine whether to retransmit a PDSCH of the PCell, and/or may determine whether to retransmit a PDSCH of the SCell.

(c) in FIG. 20 shows distributed scheduling.

Step 1 (referring to ① in (c) in FIG. 20): A PCell receives a feedback result of the PCell and/or a feedback result of an SCell. The PCell may receive the feedback result, the SCell may be the foregoing second access node, and the SCell is the foregoing first access node.

Step 2 (referring to ② in (c) in FIG. 20): The PCell may send the feedback result to the SCell through an interface between base stations.

Step 3 (referring to (3) in (c) in FIG. 20): The SCell may determine, based on the feedback result, whether to perform retransmission.

In step 3, the SCell may determine whether to retransmit a PDSCH of the PCell, and/or may determine whether to retransmit a PDSCH of the SCell.

It may be understood that the centralized feedback scenario in (a) in FIG. 12 is applicable to the protocol stacks shown in (b) in FIG. 12, (a) in FIG. 13, (b) in FIG. 13, (a) in FIG. 14, and (b) in FIG. 14. No repeated description is provided. However, in the protocol stacks shown in (a) in FIG. 11 and (b) in FIG. 11, because there is one MAC entity and two PHY entities, a feedback result may be received by using the PHY1 entity or the PHY2 entity, and the one MAC entity determines whether to perform retransmission.

A possible scenario is a data retransmission scenario. If a PCell or an SCell determines that a feedback result is a NACK, retransmission is performed. The data retransmission scenario is similar to the data exchange scenario, and is briefly described herein. The data exchange scenario is applicable to an initial transmission scenario and a retransmission scenario. The protocol stack shown in FIG. 12(a) is used as an example for description.

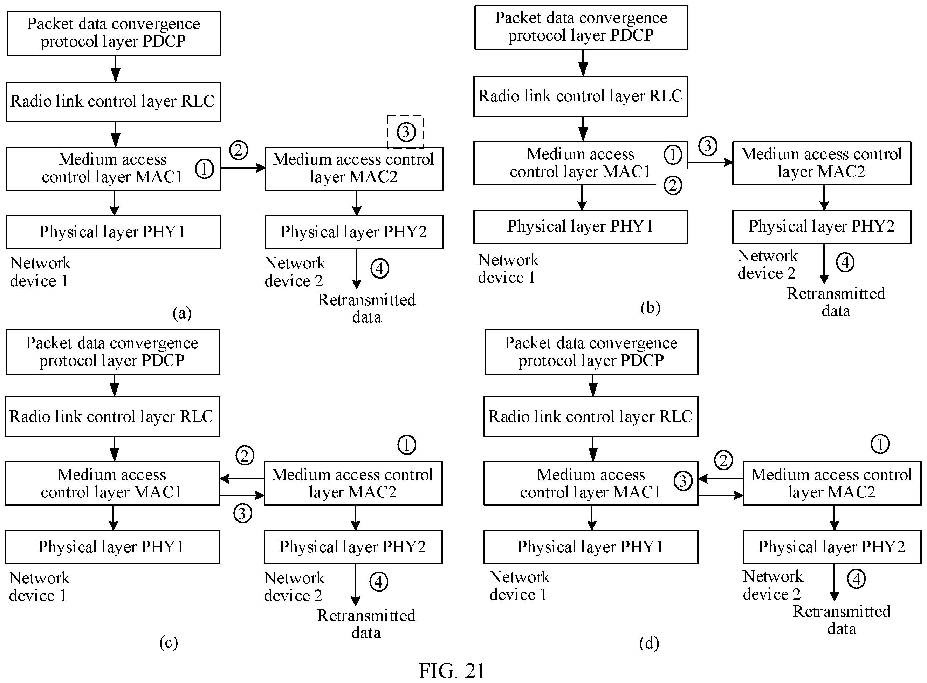

(a) in FIG. 21 shows centralized scheduling and distributed data encapsulation.

Step 1 (referring to ① in (a) in FIG. 21): A PCell generates a data scheduling result of an SCell. The PCell has a data scheduling capability, and may be a data source node, for example, may be the foregoing first access node or the foregoing second access node.

Step 2 (referring to ② in (a) in FIG. 21): The PCell may send data information to the SCell through an interface between base stations.

Optionally, in step 3 (referring to (3) in (a) in FIG. 21), the SCell obtains a MAC PDU based on the data information.

Step 4 (referring to ④ in (a) in FIG. 21): The SCell sends a PDSCH to a terminal device on a carrier on which the SCell is located.

(b) in FIG. 21 shows centralized scheduling and centralized data encapsulation.

Step 1 (referring to ① in (b) in FIG. 21): A PCell generates a data scheduling result of an SCell. The PCell has a data scheduling capability, and may be a data source node, for example, may be the foregoing first access node or the foregoing second access node.

Step 2 (referring to ② in (b) in FIG. 21): The PCell generates new RV version data.

If the PCell sends RV version data during initial transmission, the PCell may generate the new RV version data during retransmission.

Step 3 (referring to (3) in (b) in FIG. 21): The PCell may send the new RV version data to the SCell through an interface between base stations.

Step 4 (referring to ④ in (b) in FIG. 21): The SCell sends the new RV version data to a terminal device on a carrier on which the SCell is located.

(c) in FIG. 21 shows distributed scheduling and distributed data encapsulation.

Step 1 (referring to ① in (c) in FIG. 21): An SCell generates a data scheduling result of the SCell. The SCell has a data scheduling capability, and may be a data source node, for example, may be the foregoing first access node or the foregoing second access node.

Step 2 (referring to ② in (c) in FIG. 21): Optionally (during only new transmission), the SCell may send request information to a PCell through an interface between base stations, to request user data.

Step 3 (referring to (3) in (c) in FIG. 21): The PCell may send data information to the SCell through the interface between the base stations.

Step 4 (referring to ④ in (c) in FIG. 21): Optionally, the SCell performs packet assembly based on the data information to generate a MAC PDU; or the SCell directly obtains a MAC PDU from the PCell. The SCell sends a PDSCH to a terminal device on a carrier on which the SCell is located.

(d) in FIG. 21 shows distributed scheduling and centralized data scheduling.

Step 1 (referring to ① in (d) in FIG. 21): An SCell generates a data scheduling result of the SCell. The SCell has a data scheduling capability, and may be a data source node, for example, may be the foregoing first access node or the foregoing second access node.

Step 2 (referring to ② in (d) in FIG. 21): The SCell may send request information to a PCell through an interface between base stations, to request new/different RV version data.

Step 3 (referring to (3) in (d) in FIG. 21): The PCell generates the new/different RV version data, and may send the new/different RV version data to the SCell through the interface between the base stations.

Step 4 (referring to ④ in (d) in FIG. 21): The SCell sends the new/different RV version data to a terminal device on a carrier on which the SCell is located.

It may be understood that the data retransmission scenario in (a) in FIG. 12 is applicable to the protocol stacks shown in (b) in FIG. 12, (a) in FIG. 13, (b) in FIG. 13, (a) in FIG. 14, and (b) in FIG. 14. In (a) in FIG. 13 and (b) in FIG. 13, the MAC2 entity of the SCell is connected to the RLC entity, and may also obtain user data, to implement a function of a data source node. In (a) in FIG. 14 and (b) in FIG. 14, the MAC1 entity of the PCell is connected to the RLC1 entity of the PCell, and may obtain user data of the PCell, to implement a function of a data source node. The MAC2 entity of the SCell is connected to the RLC2 entity of the SCell, and may obtain user data of the SCell, to implement a function of a data source node. However, in the protocol stacks shown in (a) in FIG. 11 and (b) in FIG. 11, because there is one MAC entity and two PHY entities, the one MAC entity may generate a data scheduling result and generate a MAC PDU, and then send a PDSCH to a terminal device through the PHY1 entity or the PHY2 entity. Other similarities are not described in detail.

A possible scenario is a LTL request scenario. Optionally, a receiving node of a LTL request may be the same as a scheduling node. Alternatively, a receiving node of a UL request may be different from a scheduling node. Herein, a case in which a receiving node of a UL request is different from a scheduling node is mainly used for description. The protocol stack shown in FIG. 12(a) is used as an example for description.

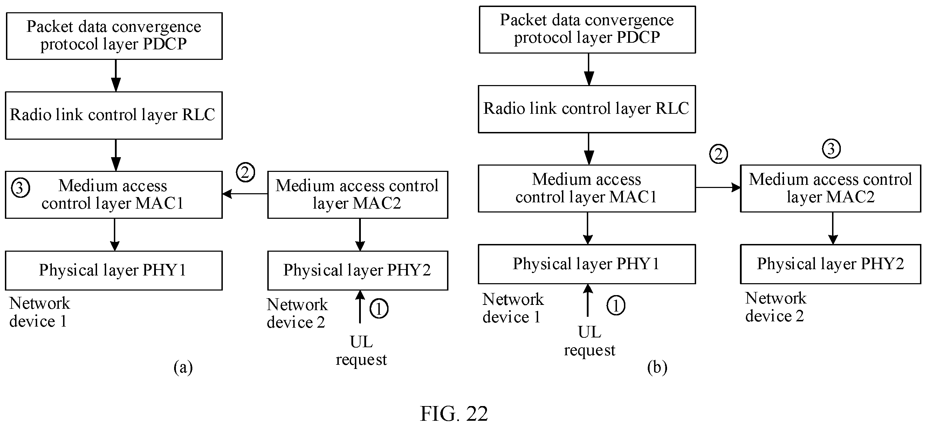

As shown in (a) in FIG. 22, a receiving node of a UL request is an SCell, and a scheduling node is a PCell.

Step 1 (referring to ① in (a) in FIG. 22): The SCell receives the UL request. The SCell may receive the UL request, the SCell may be the foregoing second access node, and the PCell is the foregoing first access node.

Step 2 (referring to ② in (a) in FIG. 22): The SCell may send information related to the UL request to the PCell through an interface between base stations.

The information related to the UL request may include UL (for example, SR/BSR/RACH/DL CSI/UAI), or may include UL CSI information obtained by the SCell by measuring an SRS of a terminal device. The DL CSI information or the UL CSI information may include but is not limited to at least one of the following: a precoding matrix indication (precoding matrix indication, PMI), a rank indication (rank indication, RI), a layer indicator (layer indicator, LI), a channel quality indicator (channel quality indicator, CQI), a CSI-RS resource indicator (CSI-RS resource indicator, CRI), reference signal received power (reference signal received power, RSRP), a covariance matrix, and a channel matrix. The DL CSI information or the UL CSI information may be information at a cell granularity or information at a beam (beam) granularity. The UAI is UE auxiliary information reported by UE to a network side, and may include a data model of an uplink periodic service of the UE.

Step 3 (referring to (3) in (a) in FIG. 22): The PCell generates a scheduling result based on information related to UL request scheduling, where the scheduling result is used to configure uplink resource information.

As shown in (b) in FIG. 22, a receiving node of a UL request is a PCell, and a scheduling node is an SCell.

Step 1 (referring to ① in (b) in FIG. 22): The PCell receives the UL request. The PCell may receive the UL request, the PCell may be the foregoing second access node, and the SCell is the foregoing first access node.

Step 2 (referring to ② in (b) in FIG. 22): The PCell may send information related to the UL request to the SCell through an interface between base stations.

Step 3 (referring to (3) in (b) in FIG. 22): The SCell generates a scheduling result based on information related to UL request scheduling, where the scheduling result is used to configure uplink resource information.

For a process of configuring uplink resource information, refer to the self-scheduling scenario and/or the cross-carrier scheduling scenario. Details are not described herein again.

(a) in FIG. 22 shows a possible BSR format. A BSR includes one LCG ID field and one buffer size field, the LCG ID field is a logical channel group identifier, and the buffer size field is an identifier of a data amount range. (b) in FIG. 22 shows another possible BSR format. A BSR includes a plurality of LCG ID fields (for example, seven LCGs) and a plurality of buffer size fields (for example, m buffer size fields).

It may be understood that the centralized feedback scenario in (a) in FIG. 12 is applicable to the protocol stacks shown in (b) in FIG. 12, (a) in FIG. 13, (b) in FIG. 13, (a) in FIG. 14, and (b) in FIG. 14. No repeated description is provided. However, in the protocol stacks shown in (a) in FIG. 11 and (b) in FIG. 11, because there is one MAC entity and two PHY entities, the one MAC entity may generate a scheduling result and generate DCI, then the PHY1 entity or the PHY2 entity receives a UL request, and the one MAC entity generates a scheduling result.

The foregoing data exchange scenario and data retransmission scenario mainly describe DL data exchange.

In a possible UL data exchange scenario, UL data sent by a terminal device may be sent to a PCell and/or an SCell. The protocol stack shown in FIG. 12(a) is used as an example for description.

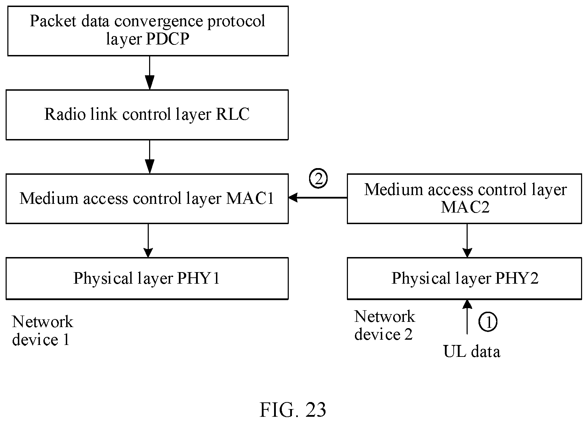

As shown in FIG. 23, an SCell receives UL data.

Step 1 (referring to ① in FIG. 23): The SCell receives a PUSCH, where the PUSCH carries the UL Data. The SCell may receive the UL data, the SCell may be the foregoing second access node, and a PCell is the foregoing first access node.

Step 2 (referring to ② in FIG. 23): The SCell may send the LTL data to the PCell through an interface between base stations.

Optionally, the SCell may send, to the PCell, UL data encoded by a PHY2 entity, where the UL data may be in a form of RV version data, or may be in a form of a MAC PDU. If a MAC 1 entity receives the RV version data, a PHY1 entity performs soft combination on the RV version data, and forwards data obtained through the soft combination to the MAC1 entity for processing.

Alternatively, the SCell may send, to the PCell, UL data processed by a MAC2 entity, where the LTL data may be in a form of a MAC SubPDU, or may be in a form of an RLC PDU. If the MAC1 entity receives the RLC PDU, the MAC1 entity may directly forward the RLC PDU to an RLC entity connected to the MAC1 entity, without performing additional processing. If the MAC1 entity receives the MAC SubPDU, the MAC1 entity may extract a MAC subheader, and identify the MAC subheader as a MAC SDU (if the MAC subheader is a MAC SDU, the MAC subheader may be directly forwarded to the RLC entity). Alternatively, if the MAC subheader is identified as a MAC CE, the MAC1 entity performs corresponding processing.

Optionally, the MAC1 entity may identify an LCH ID based on an LCID in the subheader corresponding to the MAC SDU, and then determine an RLC entity corresponding to the LCH ID.

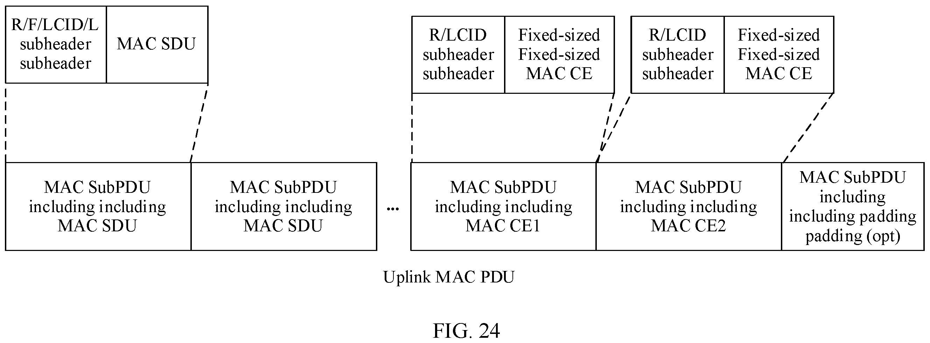

A possible frame structure of the MAC PDU is shown in FIG. 24. The MAC PDU includes a plurality of MAC SubPDUs. The MAC PDU may be an uplink MAC PDU. The MAC SubPDU meets at least one of the following.

At least one MAC SubPDU includes MAC CE2, and the MAC SubPDU that includes MAC CE2 includes an R/F/LCID/L subheader and a variable-sized MAC CE.

At least one MAC SubPDU includes a MAC SDU, and the MAC SubPDU that includes the MAC SDU includes an R/F/LCID/L subheader and the MAC SDU.

At least one MAC SubPDU includes MAC CE1, and the MAC SubPDU that includes MAC CE1 includes an R/LCID subheader and a fixed-sized MAC CE.

At least one MAC SubPDU includes a padding (padding) field.

It may be understood that the UL data exchange scenario in (a) in FIG. 12 is applicable to the protocol stacks shown in (b) in FIG. 12, (a) in FIG. 13, (b) in FIG. 13, (a) in FIG. 14, and (b) in FIG. 14. No repeated description is provided. However, in the protocol stacks shown in (a) in FIG. 11 and (b) in FIG. 11, because there is one MAC entity and two PHY entities, UL data may be received by using the PHY1 entity or the PHY2 entity, and the one MAC entity forwards the UL data to an RLC entity/a PDCP entity.

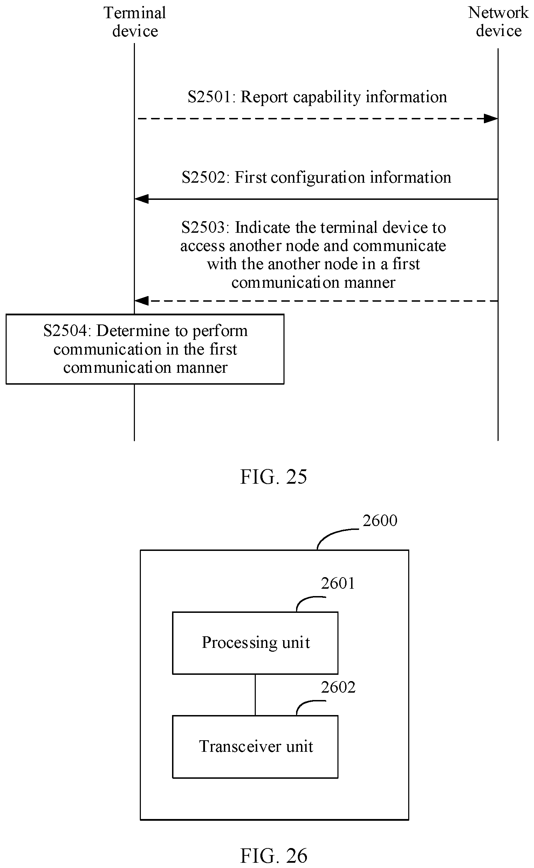

An embodiment of this application further provides a configuration process of a first protocol stack. As shown in FIG. 25, the process includes the following steps.

S2501: Optionally, a terminal device reports capability information.

The capability information indicates whether the terminal device supports an MR-CA capability.

Alternatively, the capability information may indicate whether the terminal device supports capabilities such as "cross-RAT scheduling", "cross-RAT feedback", and "cross-RAT SRS switching". Cross-RAT scheduling means that DCI in one RAT schedules data in another RAT (for example, the foregoing cross-scheduling scenario). Cross-RAT feedback means that feedbacks in two RATs are fed back in one RAT (for example, the foregoing centralized feedback scenario). Cross-RAT SRS switching means that a terminal device has only one transmit channel, and the terminal device sends SRS signals in different RATs in a time division manner in two RATs.

S2502: A network device sends first configuration information to the terminal device, where the first configuration information is used for a first communication manner.

The network device may be the foregoing first access node or the foregoing second access node.

Optionally, the first communication manner may completely reuse an MR-DC protocol stack configuration. The first configuration information includes first indication information, and the first indication information may indicate to perform MR-DC communication or MR-CA communication. The first indication information may further include an MR-DC protocol stack. The first configuration information may indicate, by using explicit information, whether to perform communication in the first communication manner. For example, 1-bit information is used for indication. When 1 bit is 1, it indicates that the first communication manner is used for communication. When 1 bit is 0, it indicates that a communication manner (for example, an MR-DC communication manner) other than the first communication manner is used for communication.

Optionally, the first communication manner may incompletely reuse an MR-DC protocol stack configuration. The first configuration information may include information about the foregoing first protocol stack. Alternatively, an association relationship between two MAC entities is added to the first configuration information. For example, MAC configuration information of a first access node may include an index or an identifier of a MAC entity of a second access node, and/or MAC configuration information of the second access node may include an index or an identifier of a MAC entity of the first access node, and/or a group of configurations includes the index or the identifier of the MAC entity of the first access node and the index or the identifier of the MAC entity of the second access node. Alternatively, an association relationship between one MAC entity and two PHY entities is added to the first configuration information. For example, MAC configuration information includes an index or an identifier of a PHY entity of a first access node, and/or an index or an identifier of a PHY entity of a second access node. For another example, PHY configuration information of a first access node includes an index or an identifier of a MAC entity, and PHY configuration information of a second access node includes an index or an identifier of a MAC entity. For another example, a group of configurations includes an index or an identifier of a MAC entity, an index or an identifier of a PHY entity of a first access node, and an index or an identifier of a PHY entity of a second access node.

S2503: Optionally, the network device may further indicate the terminal device to access another node and communicate with the another node in the first communication manner.

Optionally, the network device may activate or deactivate another node. For another node that is activated, the terminal device communicates with the another activated node in the first communication manner. When a node is activated, the terminal device may send an SRS on a CC of the node, report information such as a CQI, and detect DCI used for the node and transmitted on the node, to implement carrier aggregation and communication processes in different RATs.

S2504: The terminal device determines to perform communication in the first communication manner.

For a process in which the terminal device performs communication in the first communication manner, refer to the foregoing communication process. Details are not described herein again.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that, in the foregoing embodiments, the method and/or step implemented by the access node may be implemented by a component (such as a chip or a circuit) that can be used in the access node, and the method and/or step implemented by the terminal device may be implemented by a component that can be used in the terminal device.

The communication method in embodiments of this application is described in detail above with reference to FIG. 9 to FIG. 25. Based on a same technical concept as the foregoing communication method, an embodiment of this application further provides a communication apparatus, which may be configured to implement the method described in the foregoing method embodiment.

A possible representation form of the communication apparatus is shown in FIG. 26. The communication apparatus 2600 includes a processing unit 2601 and a transceiver unit 2602, and the apparatus 2600 may be configured to implement the method described in the foregoing method embodiment.

In an embodiment, the apparatus 2600 is used in a first access node.

Specifically, the processing unit 2601 is configured to determine scheduling information, where the scheduling information indicates resource information to be used by a second access node to receive data or send data.

The transceiver unit 2602 is configured to send the scheduling information to the second access node.

In an implementation, the scheduling information is dynamic scheduling information or semi-persistent scheduling information.

In an implementation, the scheduling information includes one or more downlink control information DCI elements, and the one or more DCI elements are used to generate DCI, or the scheduling information includes DCI.

In an implementation, the transceiver unit 2602 is further configured to: receive the DCI from the second access node; and send the DCI to a terminal device.

In an implementation, the scheduling information includes uplink scheduling information.

In an implementation, the uplink scheduling information includes one or more of the following: scheduling information of a random access channel, scheduling information of a scheduling request, scheduling information of a buffer status report, or scheduling information of a channel state.

In an implementation, the transceiver unit 2602 is further configured to receive uplink information, where the uplink information includes one or more of the following: random access channel information, the scheduling request, the buffer status report, or channel state information.

In an implementation, the transceiver unit 2602 is further configured to send data information to the second access node, where the data information is downlink data information.

In an implementation, the data information is user data, or a radio link control RLC protocol data unit PDU obtained by the first access node processing user data, or a medium access control MAC sub-protocol data unit SubPDU obtained by the first access node processing user data, or a MAC PDU obtained by the first access node processing user data, or redundancy version RV version data obtained by the first access node processing user data.

In an implementation, the transceiver unit 2602 is further configured to: before sending the data information to the second access node, receive second request information, where the second request information is for requesting the data information.

In an implementation, the transceiver unit 2602 is further configured to send logical channel information to the second access node, where the logical channel information is related to a logical channel of a user to which the user data belongs.

In an implementation, the transceiver unit 2602 is further configured to: receive data information from the second access node, where the data information is downlink data information; and send the data information to the terminal device.

In an implementation, the scheduling information includes indication information used for retransmission.

The transceiver unit 2602 is further configured to: when the data information is user data, or an RLC PDU obtained by the second access node processing user data, or a MAC SubPDU obtained by the second access node processing user data, or a MAC PDU obtained by the second access node processing user data, send retransmission scheduling information to the second access node.

The transceiver unit 2602 is further configured to: when the data information is RV version data obtained by the second access node processing user data, receive new RV version data from the second access node, and send the new RV version data to the terminal device.

In an implementation, the transceiver unit 2602 is further configured to receive, from the second access node, feedback information for the data information, where the feedback information is used to feed back a data information sending success or failure.

In an implementation, the transceiver unit 2602 is further configured to: send first request information to the second access node, where the first request information is for requesting scheduling information, and the first request information includes a scheduling result; and receive the scheduling information from the second access node.

In an implementation, a MAC entity of the first access node is connected to a MAC entity of the second access node; or a MAC entity of the first access node is separately connected to a PHY entity of the first access node and a PHY entity of the second access node.

In another embodiment, the apparatus 2600 is used in a second access node.

Specifically, the transceiver unit 2602 is configured to receive scheduling information, where the scheduling information indicates resource information to be used by the second access node to receive data or send data.

The processing unit 2601 is configured to determine the resource information for receiving data or sending data.

In an implementation, the scheduling information is dynamic scheduling information or semi-persistent scheduling information.

In an implementation, the scheduling information includes one or more downlink control information DCI elements, and the one or more DCI elements are used to generate DCI, or the scheduling information includes DCI.

In an implementation, the processing unit 2601 is further configured to generate the DCI.

The transceiver unit 2602 is further configured to send the DCI to a first access node.

In an implementation, the scheduling information includes uplink scheduling information.

In an implementation, the uplink scheduling information includes one or more of the following: scheduling information of a random access channel, scheduling information of a scheduling request, scheduling information of a buffer status report, or scheduling information of a channel state.

In an implementation, the transceiver unit 2602 is further configured to receive uplink information, where the uplink information includes one or more of the following: random access channel information, the scheduling request, the buffer status report, or channel state information; and send the uplink information to the first access node.

In an implementation, the transceiver unit 2602 is further configured to: receive data information from the first access node, where the data information is downlink data information; and send the data information to a terminal device.

In an implementation, the data information is user data, or a radio link control RLC protocol data unit PDU obtained by the first access node processing user data, or a medium access control MAC sub-protocol data unit SubPDU obtained by the first access node processing user data, or a MAC PDU obtained by the first access node processing user data, or redundancy version RV version data obtained by the first access node processing user data.

In an implementation, the transceiver unit 2602 is further configured to: before receiving the data information from the first access node, send second request information to the first access node, where the second request information is for requesting the data information.

In an implementation, the transceiver unit 2602 is further configured to receive logical channel information, where the logical channel information is related to a logical channel of a user to which the user data belongs.

In an implementation, the transceiver unit 2602 is further configured to send data information to the first access node, where the data information is downlink data information.

In an implementation, the scheduling information includes indication information used for retransmission.

The transceiver unit 2602 is further configured to: when the data information is user data, or an RLC PDU obtained by the second access node processing user data, or a MAC SubPDU obtained by the second access node processing user data, or a MAC PDU obtained by the second access node processing user data, receive retransmission scheduling information sent by the first access node.

The transceiver unit 2602 is further configured to: when the data information is RV version data obtained by the second access node processing user data, send new RV version data to the first access node.

In an implementation, the transceiver unit 2602 is further configured to: receive, from the terminal device, feedback information for the data information, where the feedback information is used to feed back a data information sending success or failure; and send the feedback information to the first access node.

In an implementation, the transceiver unit 2602 is further configured to: receive first request information, where the first request information is for requesting scheduling information, and the first request information includes a scheduling result; and send the scheduling information to the first access node.

In an implementation, a MAC entity of the first access node is connected to a MAC entity of the second access node; or a MAC entity of the first access node is separately connected to a PHY entity of the first access node and a PHY entity of the second access node.

In another embodiment, the apparatus 2600 is used in a terminal device.

Specifically, the transceiver unit 2602 is configured to receive resource information used by a second access node to receive data or send data.

The processing unit 2601 is configured to determine the resource information used by the second access node to receive data or send data.

In an implementation, the transceiver unit 2602 is specifically configured to receive DCI from the second access node or a first access node, where the DCI includes the resource information used by the second access node to receive data or send data.

In an implementation, the transceiver unit 2602 is further configured to send uplink information to the first access node or the second access node, where the uplink information includes one or more of the following: random access channel information, a scheduling request, a buffer status report, or channel state information.

In an implementation, the transceiver unit 2602 is further configured to receive data information from the first access node or the second access node, where the data information is downlink data information.

In an implementation, the transceiver unit 2602 is further configured to send feedback information for the data information to the first access node or the second access node, where the feedback information is used to feed back a data information sending success or failure.

In an implementation, a MAC entity of the first access node is connected to a MAC entity of the second access node; or a MAC entity of the first access node is separately connected to a PHY entity of the first access node and a PHY entity of the second access node.

It should be noted that division into the modules in embodiments of this application is an example, and is merely logical function division. In actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

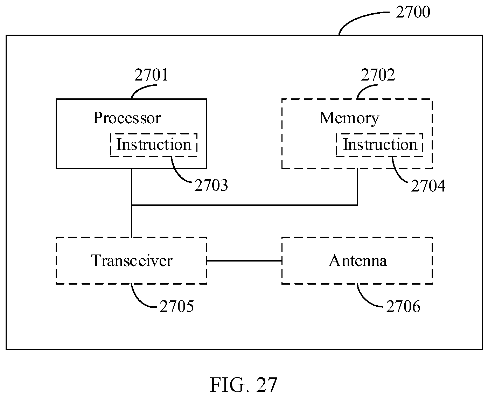

Another possible representation form of the communication apparatus is shown in FIG. 27. The apparatus 2700 may be configured to implement the method described in the foregoing method embodiment.

The apparatus 2700 includes one or more processors 2701. The processor 2701 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The apparatus 2700 includes one or more processors 2701, and the one or more processors 2701 may implement the method described in the foregoing embodiment.

Optionally, the processor 2701 may further implement another function in addition to the method in the foregoing embodiment.

Optionally, in a design, the processor 2701 may execute instructions, so that the apparatus 2700 performs the method described in the foregoing method embodiment. All or some of the instructions may be stored in the processor, for example, an instruction 2703; or all or some of the instructions may be stored in a memory 2702 coupled to the processor, for example, an instruction 2704; or the apparatus 2700 may be enabled to perform the method described in the foregoing method embodiment by using the instructions 2703 and 2704.

In another possible design, the communication apparatus 2700 may also include a logic circuit, and the logic circuit may implement the method described in the foregoing method embodiment.

In another possible design, the apparatus 2700 may include one or more memories 2702, which store instructions 2704. The instructions may be run on the processor, so that the apparatus 2700 performs the method described in the foregoing method embodiment. Optionally, the memory may further store data. Optionally, the processor may also store instructions and/or data. For example, the one or more memories 2702 may store the correspondence described in the foregoing embodiments, or the related parameter or table in the foregoing embodiments. The processor and the memory may be separately disposed, or may be integrated together.

In another possible design, the apparatus 2700 may further include a transceiver 2705 and an antenna 2706. The processor 2701 may be referred to as a processing unit, and control the apparatus (a terminal or a base station). The transceiver 2705 may be referred to as a transceiver, a transceiver circuit, an input/output interface circuit, a transceiver unit, or the like, and is configured to implement sending and receiving functions of the apparatus by using the antenna 2706. Optionally, the antenna 2706 may be integrated into the transceiver 2705.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory for the system and the method described in this specification aims to include but is not limited to these memories and any memory of another appropriate type.

An embodiment of this application further provides a computer-readable medium. The computer-readable medium stores a computer program. When the computer program is executed by a computer, the method in the foregoing method embodiment is implemented.

An embodiment of this application further provides a computer program product. When the computer program product is executed by a computer, the method in the foregoing method embodiment is implemented.

An embodiment of this application further provides a computer program. When the computer program is executed on a computer, the method in the foregoing method embodiment is implemented.

An embodiment of this application further provides a communication system. The communication system includes a first access node and a second access node. The first access node may implement the method described in the foregoing method embodiment, and the second access node may implement the method described in the foregoing method embodiment.

Optionally, the communication system may further include a terminal device.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid state drive (Solid State Drive, SSD)), or the like.

An embodiment of this application further provides a processing apparatus, including a processor and an interface. The processor is configured to perform the method described in the foregoing method embodiment. The interface is configured to communicate with a module outside the communication apparatus. The interface may be a communication interface, an input/output interface, or the like. Alternatively, the interface may be a code/data read/write interface, and the interface is configured to receive executable instructions (the executable instructions are stored in a memory, and may be read from the memory directly or through another component) and transmit the executable instructions to the processor, so that the processor runs the executable instructions to perform the method described in the foregoing method embodiment.

It should be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

A person of ordinary skill in the art may be aware that, with reference to the examples described in embodiments disclosed in this specification, units and algorithm steps can be implemented by using electronic hardware, computer software, or a combination thereof. To clearly describe interchangeability between hardware and software, the foregoing description generally describes composition and steps of each example based on functions. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be connections in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in embodiments of this application.

In addition, function units in embodiments of this application may be integrated into one processing unit, or each unit may exist alone physically, or two or more units may be integrated into one unit. The integrated unit may be implemented in a form of hardware, or may be implemented in a form of a software function unit.

With descriptions of the foregoing implementations, a person skilled in the art may clearly understand that this application may be implemented by hardware, firmware, or a combination thereof. When this application is implemented by software, the functions may be stored in a computer-readable medium or transmitted as one or more instructions or code on the computer-readable medium. The computer-readable medium includes a computer storage medium and a communication medium. The communication medium includes any medium that facilitates transfer of a computer program from one place to another. The storage medium may be any usable medium that can be accessed by a computer. By way of example and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of an instruction or a data structure and that can be accessed by a computer. In addition, any connection may be properly defined as a computer-readable medium. For example, if software is transmitted from a website, a server, or another remote source by using a coaxial cable, an optical fiber/cable, a twisted pair, a digital subscriber line (DSL), or wireless technologies such as infrared, radio, and microwave, the coaxial cable, optical fiber/cable, twisted pair, DSL, or wireless technologies such as infrared, radio, and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically in a laser manner. The foregoing combination should also be included in the protection scope of the computer-readable medium.

## Claims

1. A communication method, comprising:
determining, by a first access node, scheduling information, wherein the scheduling information indicates resource information to be used by a second access node to receive data or send data; and
sending, by the first access node, the scheduling information to the second access node.

2. The method according to claim 1, wherein the scheduling information is dynamic scheduling information or semi-persistent scheduling information.

3. The method according to claim 1 or 2, wherein the scheduling information comprises one or more downlink control information DCI elements, and the one or more DCI elements are used to generate DCI, or the scheduling information comprises DCI.

4. The method according to claim 3, further comprising:
receiving, by the first access node, the DCI from the second access node; and
sending, by the first access node, the DCI to a terminal device.

5. The method according to claim 1 or 2, wherein the scheduling information comprises uplink scheduling information.

6. The method according to claim 5, wherein the uplink scheduling information comprises one or more of the following: scheduling information of a random access channel, scheduling information of a scheduling request, scheduling information of a buffer status report, or scheduling information of a channel state.

7. The method according to claim 5 or 6, further comprising:
receiving, by the first access node, uplink information, wherein the uplink information comprises one or more of the following: random access channel information, the scheduling request, the buffer status report, or channel state information.

8. The method according to any one of claims 1 to 7, further comprising:
sending, by the first access node, data information to the second access node, wherein the data information is downlink data information.

9. The method according to claim 8, wherein the data information is user data, or a radio link control RLC protocol data unit PDU obtained by the first access node processing user data, or a medium access control MAC sub-protocol data unit SubPDU obtained by the first access node processing user data, or a MAC PDU obtained by the first access node processing user data, or redundancy version RV version data obtained by the first access node processing user data.

10. The method according to claim 8 or 9, wherein before the sending, by the first access node, data information to the second access node, the method further comprises:
receiving, by the first access node, second request information, wherein the second request information is for requesting the data information.

11. The method according to claim 9, wherein the method further comprises:
sending, by the first access node, logical channel information to the second access node, wherein the logical channel information is related to a logical channel of a user to which the user data belongs.

12. The method according to any one of claims 1 to 7, further comprising:
receiving, by the first access node, data information from the second access node, wherein the data information is downlink data information; and
sending, by the first access node, the data information to the terminal device.

13. The method according to claim 12, wherein the scheduling information comprises indication information used for retransmission; and
the method further comprises:
when the data information is user data, or an RLC PDU obtained by the second access node processing user data, or a MAC SubPDU obtained by the second access node processing user data, or a MAC PDU obtained by the second access node processing user data, sending, by the first access node, retransmission scheduling information to the second access node; or
when the data information is RV version data obtained by the second access node processing user data, receiving, by the first access node, new RV version data from the second access node, and sending the new RV version data to the terminal device.

14. The method according to any one of claims 8 to 13, further comprising:
receiving, by the first access node from the second access node, feedback information for the data information, wherein the feedback information is used to feed back a data information sending success or failure.

15. The method according to any one of claims 1 to 14, wherein the determining, by a first access node, scheduling information comprises:
sending, by the first access node, first request information to the second access node, wherein the first request information is for requesting the scheduling information, and the first request information comprises a scheduling result; and
receiving, by the first access node, the scheduling information from the second access node.

16. The method according to any one of claims 1 to 15, wherein a MAC entity of the first access node is connected to a MAC entity of the second access node; or
a MAC entity of the first access node is separately connected to a PHY entity of the first access node and a PHY entity of the second access node.

17. A communication method, comprising:
receiving, by a second access node, scheduling information, wherein the scheduling information indicates resource information to be used by the second access node to receive data or send data; and
determining, by the second access node, the resource information for receiving data or sending data.

18. The method according to claim 17, wherein the scheduling information is dynamic scheduling information or semi-persistent scheduling information.

19. The method according to claim 17 or 18, wherein the scheduling information comprises one or more downlink control information DCI elements, and the one or more DCI elements are used to generate DCI, or the scheduling information comprises DCI.

20. The method according to claim 19, further comprising:
generating, by the second access node, the DCI; and
sending, by the second access node, the DCI to the first access node.

21. The method according to claim 17 or 18, wherein the scheduling information comprises uplink scheduling information.

22. The method according to claim 21, wherein the uplink scheduling information comprises one or more of the following: scheduling information of a random access channel, scheduling information of a scheduling request, scheduling information of a buffer status report, or scheduling information of a channel state.

23. The method according to claim 21 or 22, further comprising:
receiving, by the second access node, uplink information, wherein the uplink information comprises one or more of the following: random access channel information, the scheduling request, the buffer status report, or channel state information; and
sending, by the second access node, the uplink information to the first access node.

24. The method according to any one of claims 17 to 23, further comprising:
receiving, by the second access node, data information from the first access node, wherein the data information is downlink data information; and
sending, by the second access node, the data information to a terminal device.

25. The method according to claim 24, wherein the data information is user data, or a radio link control RLC protocol data unit PDU obtained by the first access node processing user data, or a medium access control MAC sub-protocol data unit SubPDU obtained by the first access node processing user data, or a MAC PDU obtained by the first access node processing user data, or redundancy version RV version data obtained by the first access node processing user data.

26. The method according to claim 24 or 25, wherein before the receiving, by the second access node, data information from the first access node, the method further comprises:
sending, by the second access node, second request information to the first access node, wherein the second request information is for requesting the data information.

27. The method according to claim 25, wherein the method further comprises:
receiving, by the second access node, logical channel information, wherein the logical channel information is related to a logical channel of a user to which the user data belongs; and
determining, by the second access node based on the logical channel information, an amount of data to be sent to the terminal device.

28. The method according to any one of claims 17 to 23, further comprising:
sending, by the second access node, data information to the first access node, wherein the data information is downlink data information.

29. The method according to claim 28, wherein the scheduling information comprises indication information used for retransmission; and
the method further comprises:
when the data information is user data, or an RLC PDU obtained by the second access node processing user data, or a MAC SubPDU obtained by the second access node processing user data, or a MAC PDU obtained by the second access node processing user data, receiving, by the second access node, retransmission scheduling information sent by the first access node; or
when the data information is RV version data obtained by the second access node processing user data, sending, by the second access node, new RV version data to the first access node.

30. The method according to any one of claims 24 to 29, further comprising:
receiving, by the second access node from the terminal device, feedback information for the data information, wherein the feedback information is used to feed back a data information sending success or failure; and
sending, by the second access node, the feedback information to the first access node.

31. The method according to any one of claims 17 to 30, further comprising:
receiving, by the second access node, first request information, wherein the first request information is for requesting scheduling information, and the first request information comprises a scheduling result; and
sending, by the second access node, the scheduling information to the first access node.

32. The method according to any one of claims 17 to 30, wherein a MAC entity of the first access node is connected to a MAC entity of the second access node; or
a MAC entity of the first access node is separately connected to a PHY entity of the first access node and a PHY entity of the second access node.

33. A communication apparatus, comprising:
a processing unit, configured to determine scheduling information, wherein the scheduling information indicates resource information to be used by a second access node to receive data or send data; and
a transceiver unit, configured to send the scheduling information to the second access node.

34. The apparatus according to claim 33, wherein the scheduling information is dynamic scheduling information or semi-persistent scheduling information.

35. The apparatus according to claim 33 or 34, wherein the scheduling information comprises one or more downlink control information DCI elements, and the one or more DCI elements are used to generate DCI, or the scheduling information comprises DCI.

36. The apparatus according to claim 35, wherein the transceiver unit is further configured to: receive the DCI from the second access node, and send the DCI to a terminal device.

37. The apparatus according to claim 33 or 34, wherein the scheduling information comprises uplink scheduling information.

38. The apparatus according to claim 37, wherein the uplink scheduling information comprises one or more of the following: scheduling information of a random access channel, scheduling information of a scheduling request, scheduling information of a buffer status report, or scheduling information of a channel state.

39. The apparatus according to claim 37 or 38, wherein the transceiver unit is further configured to: the uplink scheduling information comprises one or more of the following: scheduling information of a random access channel, scheduling information of a scheduling request, scheduling information of a buffer status report, or scheduling information of a channel state.

40. The apparatus according to any one of claims 33 to 39, wherein the transceiver unit is further configured to send data information to the second access node, wherein the data information is downlink data information.

41. The apparatus according to claim 40, wherein the data information is user data, or a radio link control RLC protocol data unit PDU obtained after the communication apparatus processes user data, or a medium access control MAC sub-protocol data unit SubPDU obtained after the communication apparatus processes user data, or a MAC PDU obtained after the communication apparatus processes user data, or redundancy version RV version data obtained after the communication apparatus processes user data.

42. The apparatus according to claim 40 or 41, wherein the transceiver unit is further configured to: before sending the data information to the second access node, receive second request information, wherein the second request information is for requesting the data information.

43. The apparatus according to claim 41, wherein the transceiver unit is further configured to send logical channel information to the second access node, wherein the logical channel information is related to a logical channel of a user to which the user data belongs.

44. The apparatus according to any one of claims 33 to 39, wherein the transceiver unit is further configured to: receive data information from the second access node, wherein the data information is downlink data information; and send the data information to the terminal device.

45. The apparatus according to claim 44, wherein the scheduling information comprises indication information used for retransmission; and
the transceiver unit is further configured to: when the data information is user data, or an RLC PDU obtained by the second access node processing user data, or a MAC SubPDU obtained by the second access node processing user data, or a MAC PDU obtained by the second access node processing user data, send retransmission scheduling information to the second access node; or when the data information is RV version data obtained by the second access node processing user data, receive new RV version data from the second access node, and send the new RV version data to the terminal device.

46. The apparatus according to any one of claims 40 to 45, wherein the transceiver unit is further configured to receive, from the second access node, feedback information for the data information, wherein the feedback information is used to feed back a data information sending success or failure.

47. The apparatus according to any one of claims 33 to 46, wherein the transceiver unit is further configured to: send first request information to the second access node, wherein the first request information is for requesting scheduling information, and the first request information comprises a scheduling result; and receive the scheduling information from the second access node.

48. The apparatus according to any one of claims 33 to 47, wherein a MAC entity of the communication apparatus is connected to a MAC entity of the second access node; or a MAC entity of the communication apparatus is separately connected to a PHY entity of the communication apparatus and a PHY entity of the second access node.

49. A communication apparatus, comprising:
a transceiver unit, configured to receive scheduling information, wherein the scheduling information indicates resource information to be used by the communication apparatus to receive data or send data; and
a processing unit, configured to determine the resource information for receiving data or sending data.

50. The apparatus according to claim 49, wherein the scheduling information is dynamic scheduling information or semi-persistent scheduling information.

51. The apparatus according to claim 49 or 50, wherein the scheduling information comprises one or more downlink control information DCI elements, and the one or more DCI elements are used to generate DCI, or the scheduling information comprises DCI.

52. The apparatus according to claim 51, wherein the processing unit is further configured to generate the DCI; and
the transceiver unit is further configured to send the DCI to a first access node.

53. The apparatus according to claim 49 or 50, wherein the scheduling information comprises uplink scheduling information.

54. The apparatus according to claim 53, wherein the uplink scheduling information comprises one or more of the following: scheduling information of a random access channel, scheduling information of a scheduling request, scheduling information of a buffer status report, or scheduling information of a channel state.

55. The apparatus according to claim 53 or 54, wherein the transceiver unit is further configured to: receive uplink information, wherein the uplink information comprises one or more of the following: random access channel information, the scheduling request, the buffer status report, or channel state information; and send the uplink information to the first access node.

56. The apparatus according to any one of claims 49 to 55, wherein the transceiver unit is further configured to: receive data information from the first access node, wherein the data information is downlink data information; and send the data information to a terminal device.

57. The apparatus according to claim 56, wherein the data information is user data, or a radio link control RLC protocol data unit PDU obtained by the first access node processing user data, or a medium access control MAC sub-protocol data unit SubPDU obtained by the first access node processing user data, or a MAC PDU obtained by the first access node processing user data, or redundancy version RV version data obtained by the first access node processing user data.

58. The apparatus according to claim 56 or 57, wherein the transceiver unit is further configured to: before receiving the data information from the first access node, send second request information to the first access node, wherein the second request information is for requesting the data information.

59. The apparatus according to claim 57, wherein the transceiver unit is further configured to receive logical channel information, wherein the logical channel information is related to a logical channel of a user to which the user data belongs; and
the processing unit is further configured to determine, based on the logical channel information, an amount of data to be sent to the terminal device.

60. The apparatus according to any one of claims 49 to 55, wherein the processing unit is further configured to send data information to the first access node, wherein the data information is downlink data information.

61. The apparatus according to claim 60, wherein the scheduling information comprises indication information used for retransmission; and
the transceiver unit is further configured to: when the data information is user data, or an RLC PDU obtained after the communication apparatus processes user data, or a MAC SubPDU obtained after the communication apparatus processes user data, or a MAC PDU obtained after the communication apparatus processes user data, receive retransmission scheduling information sent by the communication apparatus; or when the data information is RV version data obtained after the communication apparatus processes user data, send new RV version data to the first access node.

62. The apparatus according to any one of claims 56 to 61, wherein the transceiver unit is further configured to: receive, from the terminal device, feedback information for the data information, wherein the feedback information is used to feed back a data information sending success or failure; and send the feedback information to the first access node.

63. The apparatus according to any one of claims 49 to 62, wherein the transceiver unit is further configured to: receive first request information, wherein the first request information is for requesting scheduling information, and the first request information comprises a scheduling result; and send the scheduling information to the first access node.

64. The apparatus according to any one of claims 49 to 63, wherein a MAC entity of the first access node is connected to a MAC entity of the communication apparatus; or a MAC entity of the first access node is separately connected to a PHY entity of the first access node and a PHY entity of the communication apparatus.

65. A communication apparatus, wherein the communication apparatus comprises a processor, wherein
the processor is configured to read a computer program or instructions stored in a memory, and execute the computer program or the instructions, to enable the communication apparatus to perform the method according to any one of claims 1 to 16, or enable the communication apparatus to perform the method according to any one of claims 17 to 32.

66. The apparatus according to claim 65, wherein the communication apparatus further comprises the memory, and the processor is coupled to the memory.

67. A communication apparatus, wherein the communication apparatus comprises a processor and an interface circuit;
the interface circuit is configured to communicate with a module outside the communication apparatus; and
the processor is configured to execute a computer program or instructions, to enable the communication apparatus to perform the method according to any one of claims 1 to 16, or enable the communication apparatus to perform the method according to any one of claims 17 to 32.

68. A computer-readable storage medium, comprising a computer program or instructions, wherein when the computer program or the instructions is/are run on a computer, the method according to any one of claims 1 to 16 is performed, or the method according to any one of claims 17 to 32 is performed.

69. A computer program product, wherein when the computer program product runs on a computer, the method according to any one of claims 1 to 16 is performed, or the method according to any one of claims 17 to 32 is performed.

70. A communication apparatus, wherein the communication apparatus is configured to perform the method according to any one of claims 1 to 16, or perform the method according to any one of claims 17 to 32.

71. A communication system, wherein the communication system comprises the communication apparatus according to any one of claims 33 to 48 and the communication apparatus according to any one of claims 49 to 64.
